# EUROPEAN PATENT APPLICATION

(11) **EP 4 567 329 A1**
(43) Date of publication of application: **11.06.2025**
(21) Application number: 24213581.2
(22) Date of filing: 18.11.2024
(51) Int. Cl.: F23R 3/04, F23R 3/10

(54) **GAS TURBINE ENGINE AND COMBUSTOR THEREFOR**

(30) Priority: 07.12.2023 US 202318532647
(71) Applicant: General Electric Company, Cincinnati, Ohio 45215 (US); GE Aerospace Poland Sp. z o.o., 02-256 Warsaw (PL)
(72) Inventor: TOMASZEWSKI, Bart omiej Adam, 02-256 Warsaw (PL); STA CZYK, Maciej, 02-256 Warsaw (PL); TOMASZEWSKI, ukasz Filip, 02-256 Warsaw (PL); BULSIEWICZ, Tomasz Jan, 02-256 Warsaw (PL); GANIGER, Ravindra Shankar, Evendale, 45215 (US); NATH, Hiranya Kumar, Evendale, 45215 (US); BENJAMIN, Michael, Evendale, 45215 (US)
(74) Representative: Openshaw & Co.

(57) **Abstract**

A combustor (30) for a turbine engine (10) comprises a dome wall (46, 146, 246, 346, 446, 546, 646, 746, 846, 946, 1046, 1146, 2046); a combustor liner (40) extending from the dome wall (46, 146, 246, 346, 446, 546, 646, 746, 846, 946, 1046, 1146, 2046); and a combustion chamber (50) at least partially defined by the dome wall (46, 146, 246, 346, 446, 546, 646, 746, 846, 946, 1046, 1146, 2046) and the combustor liner (40). The dome wall (46, 146, 246, 346, 446, 546, 646, 746, 846, 946, 1046, 1146, 2046) includes: a fuel cup (31, 131, 231, 331, 431, 531, 631, 731, 831, 931, 1031, 1131, 2031) disposed at a dome wall section of the dome wall (46, 146, 246, 346, 446, 546, 646, 746, 846, 946, 1046, 1146, 2046), a set of air tubes (70, 170, 270, 370, 470, 570, 670, 770, 870, 970, 1070, 1170, 2070), and a set of cooling holes (80, 180, 280, 380, 480, 580, 680, 780, 880, 980, 1080, 1180, 2080).

## Description

### TECHNICAL FIELD

The present subject matter relates generally to a gas turbine engine having a combustor.

### BACKGROUND

Turbine engines are driven by a flow of combustion gases passing through the engine to rotate a multitude of turbine blades, which, in turn, rotate a compressor to provide compressed air to the combustor for combustion. A combustor can be provided within the turbine engine and is fluidly coupled with a turbine into which the combusted gases flow.

Historically, fuels are used in the combustor of a turbine engine. Generally, air and fuel are fed to a combustion chamber, the air and fuel are mixed, and then the fuel is burned in the presence of the air to produce hot gas. The hot gas is then fed to a turbine to produce power.

### BRIEF DESCRIPTION OF THE DRAWINGS

In the drawings:
FIG. 1 is a schematic cross-sectional view of a turbine engine having a compressor section, a combustion section, and a turbine section in accordance with various aspects described herein.
FIG. 2 is a schematic view of a combustor of the combustion section of FIG. 1 along line II-II in accordance with various aspects described herein.
FIG. 3 is a schematic view illustrating portions of the combustor of FIG. 2 along line III-III in accordance with various aspects described herein.
FIG. 4 is a schematic view illustrating portions of a combustor in accordance with various aspects described herein.
FIG. 5 is a schematic view illustrating portions of a combustor, from aft looking forward, in accordance with various aspects described herein.
FIG. 6 is a schematic view illustrating portions of a combustor in accordance with various aspects described herein.
FIG. 7 is a schematic view illustrating portions of the combustor of FIG. 6, from forward looking aft, in accordance with various aspects described herein.
FIG. 8 is a schematic view illustrating portions of a combustor in accordance with various aspects described herein.
FIGS. 9A and 9B are schematic views illustrating portions of the combustor of FIG. 8, from forward looking aft, and from aft looking forward, respectively, in accordance with various aspects described herein.
FIG. 10 is a schematic view illustrating portions of a combustor in accordance with various aspects described herein.
FIGS. 11A and 11B are schematic views illustrating portions of the combustor of FIG. 10, from forward looking aft, and from aft looking forward, respectively, in accordance with various aspects described herein.
FIG. 12 is a schematic view illustrating portions of a combustor in accordance with various aspects described herein.
FIGS. 13A and 13B are schematic views illustrating portions of the combustor of FIG. 12, from forward looking aft, and from aft looking forward, respectively, in accordance with various aspects described herein.
FIG. 13C is a schematic view illustrating portions of the combustor of FIGS. 12-13B along line C-C of FIG. 13B in accordance with various aspects described herein.
FIG. 14 is a schematic view illustrating portions of a combustor in accordance with various aspects described herein.
FIGS. 15A and 15B are schematic views illustrating portions of the combustor of FIG. 14, from forward looking aft, and from aft looking forward, respectively, in accordance with various aspects described herein.
FIG. 16 is a schematic view illustrating portions of a combustor in accordance with various aspects described herein.
FIGS. 17A and 17B are schematic views illustrating portions of the combustor of FIG. 16, from forward looking aft, and from aft looking forward, respectively, in accordance with various aspects described herein.
FIG. 18 is a schematic view illustrating portions of a combustor in accordance with various aspects described herein.
FIGS. 19A and 19B are schematic views illustrating portions of the combustor of FIG. 18, from forward looking aft, and from aft looking forward, respectively, in accordance with various aspects described herein.
FIG. 20 is a schematic view illustrating portions of a combustor in accordance with various aspects described herein.
FIGS. 21A and 21B are schematic views illustrating portions of the combustor of FIG. 20, from forward looking aft, and from aft looking forward, respectively, in accordance with various aspects described herein.
FIG. 22 is a schematic view illustrating portions of a combustor in accordance with various aspects described herein.
FIGS. 23A and 23B are schematic views illustrating portions of the combustor of FIG. 22, from forward looking aft, and from aft looking forward, respectively, in accordance with various aspects described herein.
FIG. 24 is a schematic view illustrating portions of a combustor in accordance with various aspects described herein.
FIGS. 25A and 25B are schematic views illustrating portions of the combustor of FIG. 24, from forward looking aft, and from aft looking forward, respectively, in accordance with various aspects described herein.
FIG. 26 is a schematic view illustrating portions of a combustor in accordance with various aspects described herein.
FIGS. 27A and 27B are schematic views illustrating portions of the combustor of FIG. 26, from forward looking aft, and from aft looking forward, respectively, in accordance with various aspects described herein.
FIG. 28 is a schematic view illustrating portions of a combustor in accordance with various aspects described herein.
FIGS. 29A and 29B are schematic views illustrating portions of the combustor of FIG. 28, from forward looking aft, and from aft looking forward, respectively, in accordance with various aspects described herein.
FIG. 30 is a schematic view illustrating portions of a combustor in accordance with various aspects described herein.
FIGS. 31A and 31B are schematic views illustrating portions of the combustor of FIG. 30, from forward looking aft, and from aft looking forward, respectively, in accordance with various aspects described herein.
FIG. 32 is a schematic view illustrating portions of a combustor in accordance with various aspects described herein.
FIGS. 33A and 33B are schematic views illustrating portions of the combustor of FIG. 32, from forward looking aft, and from aft looking forward, respectively, in accordance with various aspects described herein.
FIG. 34 is a schematic view illustrating portions of a combustor in accordance with various aspects described herein.
FIGS. 35A and 35B are schematic views illustrating portions of the combustor of FIG. 34, from forward looking aft, and from aft looking forward, respectively, in accordance with various aspects described herein.
FIG. 36 is a schematic view illustrating portions of a combustor in accordance with various aspects described herein.
FIGS. 37A and 37B are schematic views illustrating portions of the combustor of FIG. 36, from forward looking aft, and from aft looking forward, respectively, in accordance with various aspects described herein.
FIG. 38 is a schematic view illustrating portions of a combustor in accordance with various aspects described herein.
FIGS. 39A and 39B are schematic views illustrating portions of the combustor of FIG. 38, from forward looking aft, and from aft looking forward, respectively, in accordance with various aspects described herein.
FIG. 40 is a schematic view illustrating portions of a combustor in accordance with various aspects described herein.
FIGS. 41A and 41B are schematic views illustrating portions of the combustor of FIG. 40, from forward looking aft, and from aft looking forward, respectively, in accordance with various aspects described herein.

### DETAILED DESCRIPTION

Aspects of the disclosure described herein are directed to a combustor. For purposes of illustration, the present disclosure will be described with respect to a turbine engine. It will be understood, however, that aspects of the disclosure described herein are not so limited and that a combustor as described herein can be implemented in engines, including but not limited to turbojet, turboprop, turboshaft, and turbofan engines. Aspects of the disclosure discussed herein may have general applicability within non-aircraft engines having a combustor, such as other mobile applications and non-mobile industrial, commercial, and residential applications.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As may be used herein, the terms "first", "second", and "third" may be used interchangeably to distinguish one component from another and are not intended to signify location or importance of the individual components.

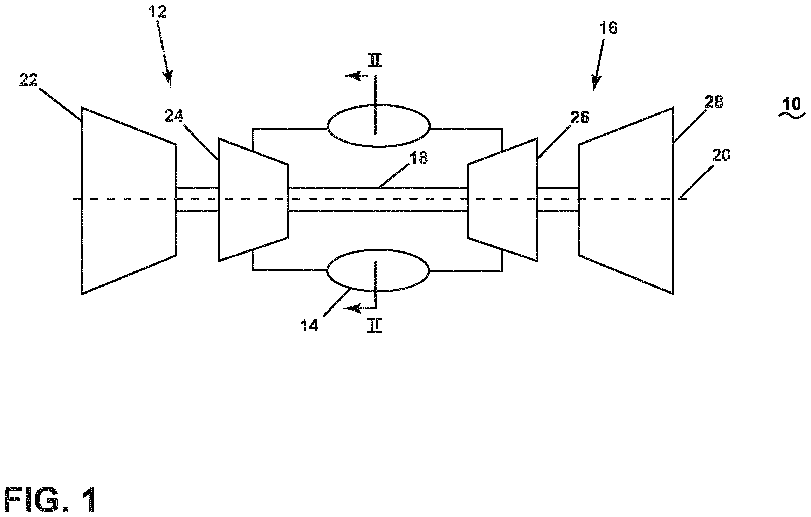

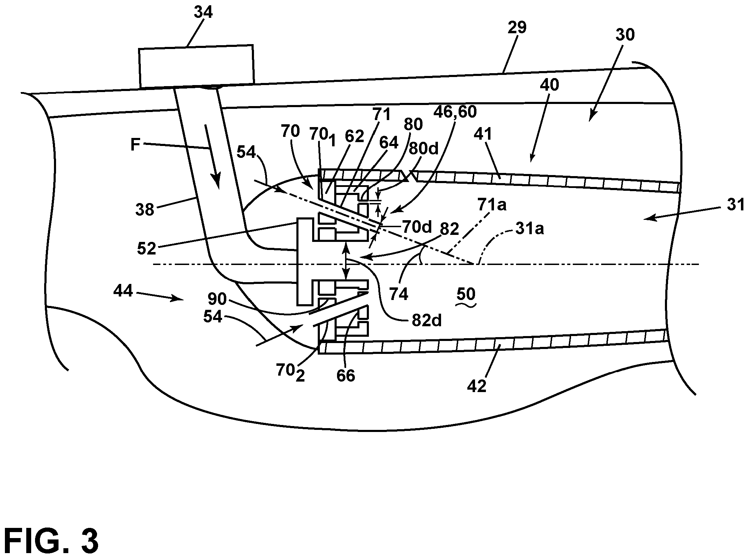

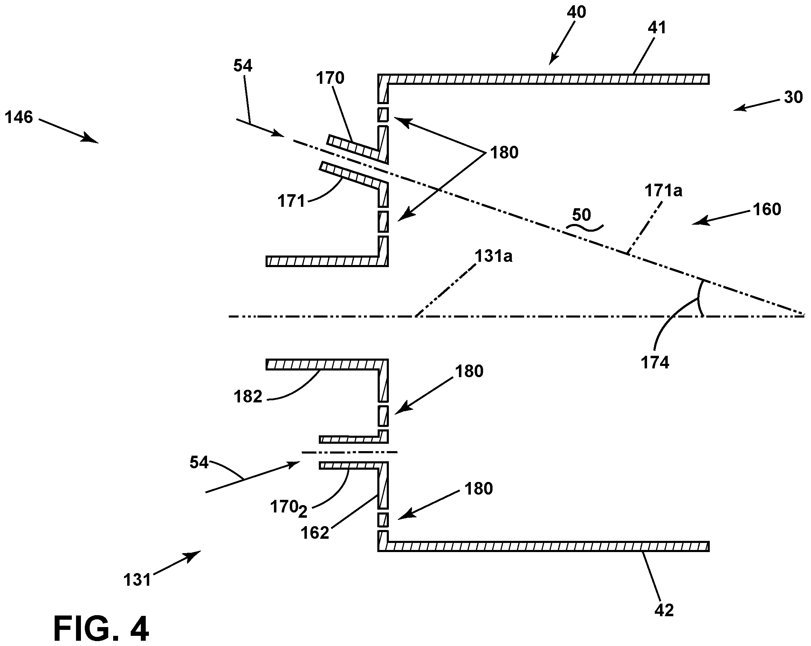

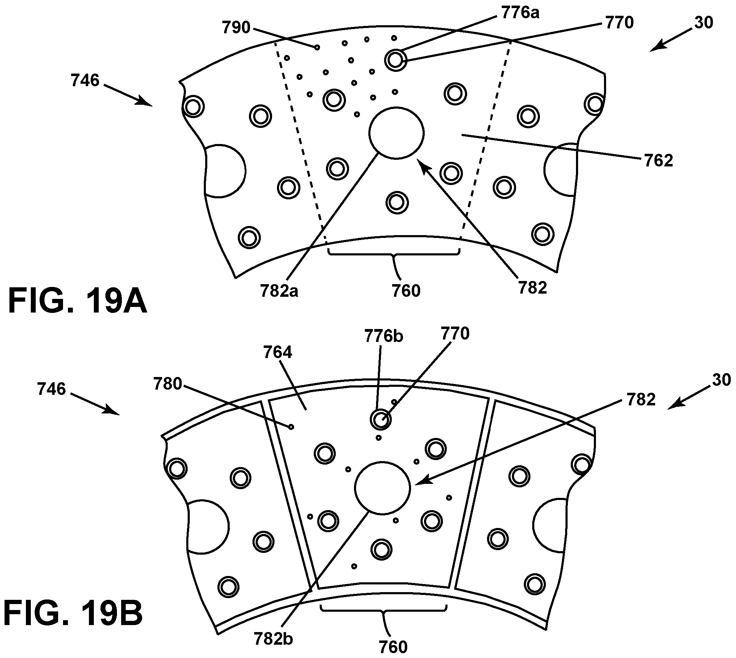

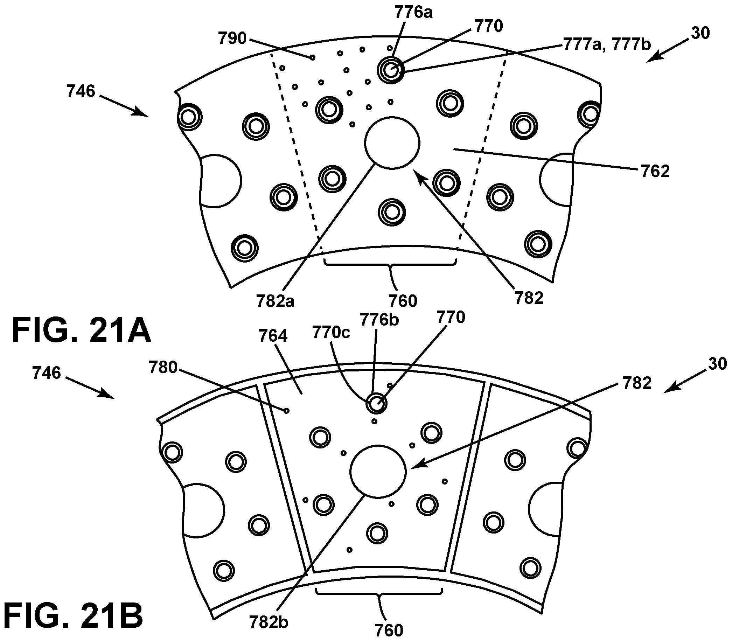

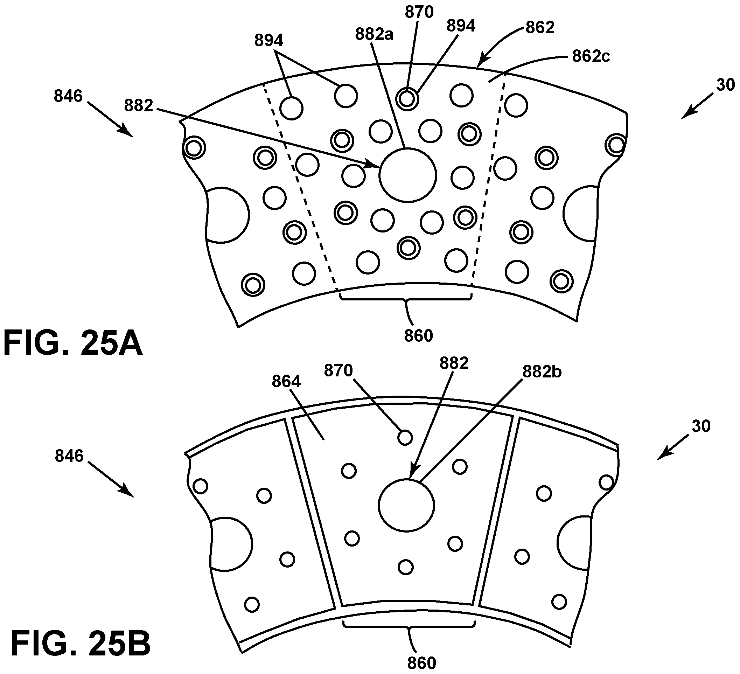

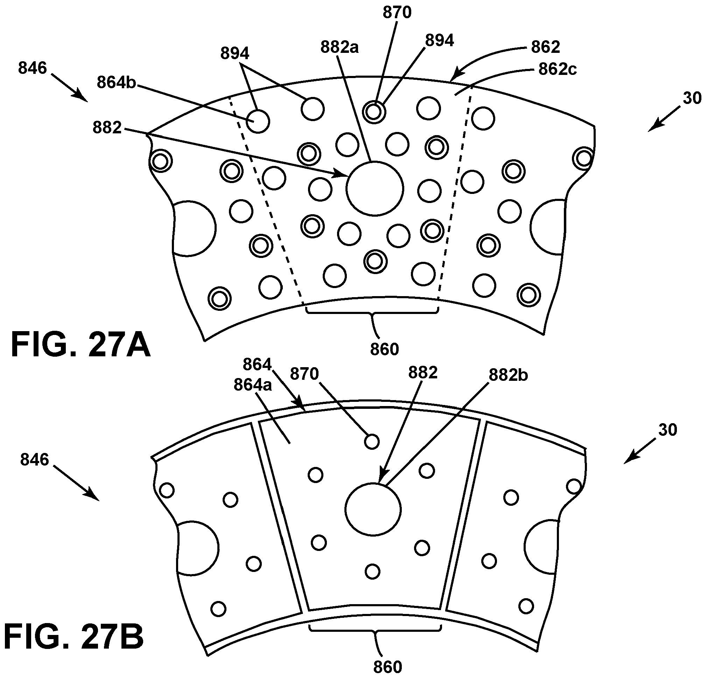

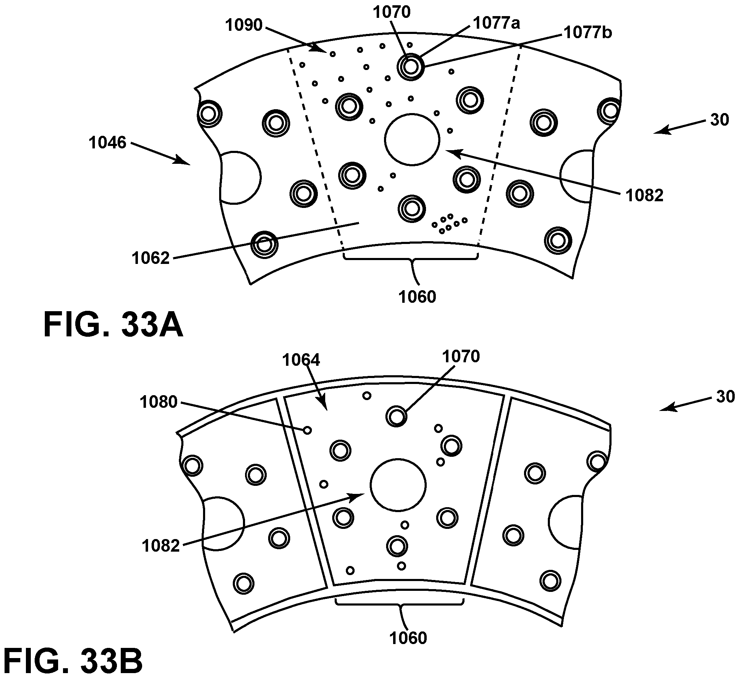

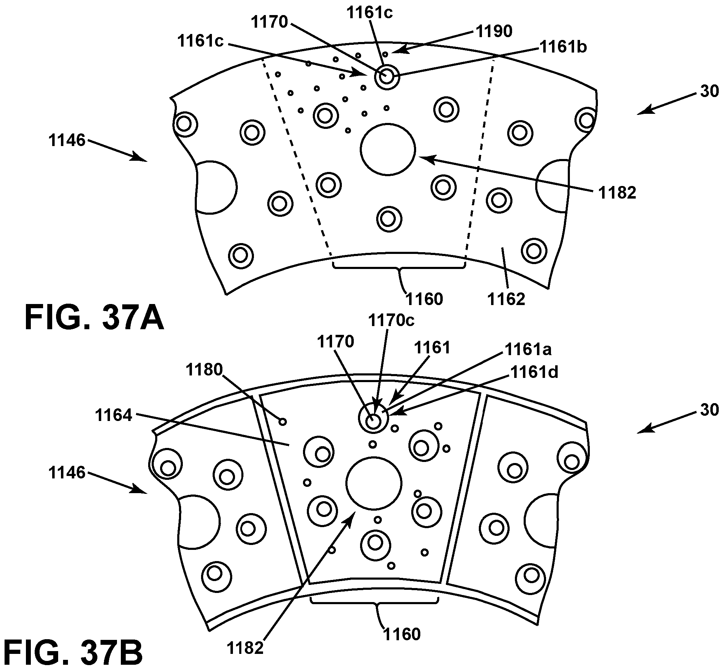

The terms "forward" and "aft" refer to relative positions within a gas turbine engine or a vehicle, and refer to the normal operational attitude of the gas turbine engine or vehicle. For example, with regard to a gas turbine engine, forward refers to a position closer to an engine inlet and aft refers to a position closer to an engine exhaust. In FIG. 1, FIG. 3, and the even-numbered drawings of FIGS. 4-40, forward is generally illustrated to the left, and aft/rearward is generally illustrated to the right.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" may be a gas or a liquid. The term "fluid communication" means that a fluid is capable of making the connection between the areas specified.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only the dimensions, positions, order and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

Uses of "and" and "or" are to be construed broadly. For example and without limitation, uses of "and" do not necessarily require all elements or features listed, and uses of "or" are inclusive unless such a construction would be illogical.

Approximating language, as used herein throughout the specification and claims, is applied to modify any quantitative representation that could permissibly vary without resulting in a change in the basic function to which it is related. Accordingly, a value modified by a term or terms, such as "about", "approximately", "generally", and "substantially", are not to be limited to the precise value specified. In at least some instances, the approximating language may correspond to the precision of an instrument for measuring the value, or the precision of the methods or machines for constructing or manufacturing the components and systems. In at least some instances, the approximating language may correspond to the precision of an instrument for measuring the value, or the precision of the methods or machines for constructing or manufacturing the components and systems. For example, the approximating language may refer to being within a 1, 2, 4, 5, 10, 15, or 20 percent margin in either individual values, range(s) of values and endpoints defining range(s) of values. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

"Proximate" as used herein is not limiting, rather a descriptor for locating parts described herein. Further, the term "proximate" means nearer or closer to the part recited than the following part. For example, a first hole proximate a wall, the first hole located upstream from a second hole means that the first hole is closer to the wall than the first hole is to the second hole.

FIG. 1 is a schematic view of a turbine engine 10. As a non-limiting example, the turbine engine 10 can be used within an aircraft. The turbine engine 10 can include, at least, a compressor section 12, a combustion section 14, and a turbine section 16. A drive shaft 18 rotationally couples the compressor section 12 and turbine section 16, such that rotation of one affects the rotation of the other, and defines a rotational axis 20 for the turbine engine 10.

The compressor section 12 can include a low-pressure (LP) compressor 22, and a highpressure (HP) compressor 24 serially fluidly coupled to one another. The turbine section 16 can include an HP turbine 26, and an LP turbine 28 serially fluidly coupled to one another. The drive shaft 18 can operatively couple the LP compressor 22, the HP compressor 24, the HP turbine 26 and the LP turbine 28 together. Alternatively, the drive shaft 18 can include an LP drive shaft (not illustrated) and an HP drive shaft (not illustrated). The LP drive shaft can couple the LP compressor 22 to the LP turbine 28, and the HP drive shaft can couple the HP compressor 24 to the HP turbine 26. An LP spool can be defined as the combination of the LP compressor 22, the LP turbine 28, and the LP drive shaft such that the rotation of the LP turbine 28 can apply a driving force to the LP drive shaft, which in turn can rotate the LP compressor 22. An HP spool can be defined as the combination of the HP compressor 24, the HP turbine 26, and the HP drive shaft such that the rotation of the HP turbine 26 can apply a driving force to the HP drive shaft which in turn can rotate the HP compressor 24.

The compressor section 12 can include a plurality of axially spaced stages. Each stage includes a set of circumferentially-spaced rotating blades and a set of circumferentially-spaced stationary vanes. The compressor blades for a stage of the compressor section 12 can be mounted to a disk, which is mounted to the drive shaft 18. Each set of blades for a given stage can have its own disk. The vanes of the compressor section 12 can be mounted to a casing which can extend circumferentially about the turbine engine 10. It will be appreciated that the representation of the compressor section 12 is merely schematic and that there can be any number of blades, vanes and stages. Further, it is contemplated that there can be any number of other components within the compressor section 12.

Similar to the compressor section 12, the turbine section 16 can include a plurality of axially spaced stages, with each stage having a set of circumferentially-spaced, rotating blades and a set of circumferentially-spaced, stationary vanes. The turbine blades for a stage of the turbine section 16 can be mounted to a disk which is mounted to the drive shaft 18. Each set of blades for a given stage can have its own disk. The vanes of the turbine section can be mounted to the casing in a circumferential manner. It is noted that there can be any number of blades, vanes and turbine stages as the illustrated turbine section is merely a schematic representation. Further, it is contemplated that there can be any number of other components within the turbine section 16.

The combustion section 14 can be provided serially between the compressor section 12 and the turbine section 16. The combustion section 14 can be fluidly coupled to at least a portion of the compressor section 12 and the turbine section 16 such that the combustion section 14 at least partially fluidly couples the compressor section 12 to the turbine section 16. As a non-limiting example, the combustion section 14 can be fluidly coupled to the HP compressor 24 at an upstream end of the combustion section 14 and to the HP turbine 26 at a downstream end of the combustion section 14.

During operation of the turbine engine 10, ambient or atmospheric air is drawn into the compressor section 12 via a fan (not illustrated) upstream of the compressor section 12, where the air is compressed defining a pressurized air. The pressurized air can then flow into the combustion section 14 where the pressurized air is mixed with fuel and ignited, thereby generating combustion gases. Some work is extracted from these combustion gases by the HP turbine 26, which drives the HP compressor 24. The combustion gases are discharged into the LP turbine 28, which extracts additional work to drive the LP compressor 22, and the exhaust gas is ultimately discharged from the turbine engine 10 via an exhaust section (not illustrated) downstream of the turbine section 16. The driving of the LP turbine 28 drives the LP spool to rotate the fan (not illustrated) and the LP compressor 22. The pressurized airflow and the combustion gases can together define a working airflow that flows through the fan, compressor section 12, combustion section 14, and turbine section 16 of the turbine engine 10.

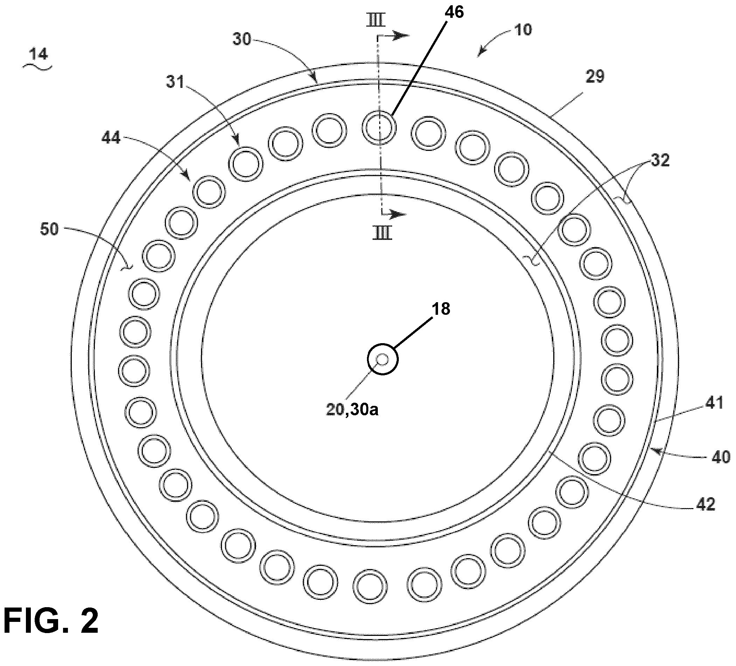

FIG. 2 depicts a cross-sectional view a combustor 30 of the combustion section 14 along line II-II of FIG. 1. The combustor 30 can include an annular arrangement of fuel cups 31 disposed around the centerline or rotational axis 20 of the turbine engine 10. The combustor 30 can have a can, can-annular, or annular arrangement depending on the type of engine in which the combustor 30 is located. In a non-limiting example, the combustor 30 can have a combination arrangement located with a casing 29 of the engine. The combustor 30 can include a centerline 30a that can be coincident with the centerline 20.

The combustor 30 can be at least partially defined by a combustor liner 40. In some examples, the combustor liner 40 can include an outer liner 41 and an inner liner 42 concentric with respect to each other and arranged in an annular fashion about the engine centerline or rotational axis 20. In some examples, the combustor liner 40 can have an annular structure about the combustor 30. In some examples, the combustor liner 40 can include multiple segments or portions collectively forming the combustor liner 40. In some examples, the combustor liner 40 can include the outer liner 41 radially spaced from the inner liner 42. In some examples, the combustor liner 40 can include a single liner.

A dome assembly 44 together with the combustor liner 40 can at least partially define a combustion chamber 50 arranged annularly about the rotational axis 20. For example, a dome wall 46 of the dome assembly 44 can be substantially perpendicular to the rotational axis 20 and can cooperate with the outer liner 41, the inner liner 42, or both, to at least partially define the combustion chamber 50. In other configurations, the dome wall 46 is disposed at an angle relative to the rotation axis 20.

The fuel cups 31 can be separately provided at the dome wall 46. For example and without limitation, the fuel cups 31 can be provided at the dome wall 46 in a circumferentially spaced configuration. The fuel cups 31 can be disposed at a radial distance from the rotational axis 20 that is greater than a radial distance of the inner liner 42 and less than a radial distance of the outer liner 41. The dome wall 46 can include a dome wall section 60 (FIG. 3) for each fuel cup 31.

FIG. 3 is a cross-sectional view of the combustor 30 along line III-III of FIG. 2. The combustor 30 can include or be connected to a fuel supply 34 (e.g., an eternal fuel manifold). The fuel supply 34 can be connected to an outer surface of the casing 29. One or more fuel nozzles 38, connected to the dome wall 46, fluidly couple the fuel supply 34 with the fuel cups 31 and the combustion chamber 50. The fuel F can include any suitable fuel, including hydrocarbon fuel or hydrogen fuel in non-limiting examples. In an example aspect, the fuel cup 31 includes or is fluidly coupled with a swirler 52. The swirler 52 can be provided at or about the dome wall 46 and, in some instances, can be disposed at least partially in a fuel inlet 82 of the dome wall 46. The swirler 52 can swirl incoming air 54, such as compressed air 54 from the compressor section 12 (FIG. 1), in proximity of fuel F exiting the fuel nozzle 38, which may facilitate a homogeneous mixture of air and fuel entering the combustion chamber 50. Additionally or alternatively, the fuel inlet 82 can receive air from the swirler 52, air circuits other than the swirler 52, or a combination thereof.

In some examples, the combustor 30 can include the dome wall 46 and the combustor liner 40 extending from the dome wall 46 in an axial direction relative to a fuel cup centerline 31a. The dome wall 46 can be generally perpendicular to the axial direction but can be disposed at other angles relative to the axial direction. The combustion chamber 50 can be at least partially defined by the dome wall 46 and the combustor liner 40. The fuel cup 31 can be disposed at a dome wall section 60 of the dome wall 46. The dome wall 46 can, for example, include a dome wall section 60 for each fuel cup 31. With configurations having an annular dome wall 46, the sections 60 can include annular sectors.

A set of air tubes 70 can extend at least partially through the dome wall 46 to direct air, such as air 54, into the combustion chamber 50. The air 54 provided to the set of air tubes 70 and directed into the combustion chamber 50 may be devoid of fuel. For example, some or all of the set of air tubes 70 may be offset from, not in fluid communication with, or both, the fuel inlet 82 such that the air tubes 70 do not receive or convey fuel or a fuel-air mixture. The set of air tubes 70 can include one or more of a variety of cross-sectional shapes, including, for example, circular, oval-shaped, or rectangular, among others. The set of air tubes 70 can direct air 54 into the combustion chamber 50 to control, at least in part, flame distribution. One or more of the air tubes 70 can include a portion 71 having an air tube centerline 71a disposed at an angle 74 relative to the fuel cup centerline 31a. The angle 74 may include an oblique angle such that one or more air tubes 70 direct air 54 radially inward or radially outward, relative to the fuel cup centerline 31a, at least to some degree. For example, in some configurations, one or more air tube centerlines 71a may not be parallel to the axial direction or perpendicular to the radial direction. Additionally or alternatively, one or more air tube centerlines 71a may be parallel to the axial direction and perpendicular to the radial direction. The angle 74 can, with an example of the set of air tubes 70, be defined between the fuel cup centerline 31a and the air tube centerline 71a in a plane including the fuel cup centerline 31a and a radius thereof (e.g., a radial plane).

In some configurations, the one or more air tubes 70 can be disposed at an additional angle, such as an additional oblique angle, relative to the radial plane (e.g., one or more air tubes 70 can be not perpendicular to the circumferential direction). The set of air tubes 70 can comprise one air tube or a plurality of air tubes 70. For example and without limitation, the set of air tubes 70 can include at least two, three, four, or more air tubes 70. The set of air tubes 70 can be disposed in a circumferentially spaced configuration about the fuel cup centerline 31a but can be spaced about the section 60 of the dome wall 46 in other configurations, such as a rectangular pattern, a spiral pattern, a non-uniform configuration, or a combination thereof. For example, in some configurations, all of the air tubes 70 of a set of air tubes 70 can have a different configuration (e.g., angles, length, hydraulic diameter, among others). The set of air tubes 70 can, in some examples, include a first air tube 70₁ and a second air tube 70₂.

With some aspects, at least one of the set of air tubes 70 can have a diameter 70d (e.g., a hydraulic diameter) that converges toward the combustion chamber 50 (e.g., a converging hydraulic diameter). Additionally or alternatively, at least one of the set of air tubes 70 can have an inner diameter 70d that diverges toward the combustion chamber (e.g., a diverging hydraulic diameter). For example, the dome wall section 60 can include one or more air tubes 70 with a converging diameter in a rearward direction, one or more other air tubes 70 with a diverging diameter in the rearward direction, one or more other air tubes 70 with a constant diameter, or a combination thereof. Additionally or alternatively, the inner diameter 70d of one or more of the set of air tubes 70 can be constant.

The dome wall 46 can include a set of cooling holes 80 extending at least partially through the section 60 of the dome wall 46. The air 54 may be provided to the cooling holes 80 to cool portions of the dome wall 46, such as from the compressor section 12 (FIG. 1). The air 54 provided to the cooling holes 80 may be devoid of fuel. The cooling holes 80 can be parallel with the fuel cup centerline 31a. Additionally or alternatively, one or more of the set of cooling holes 80 can be disposed at angles relative to the fuel cup centerline 31a, which can include radial components, tangential components, or both. With some aspects, an axial extent of the set of cooling holes 80 can be less than an axial extent of one or more of the set of air tubes 70. For example and without limitation, the axial extent of the set of cooling holes 80 can be 50% or less of the axial extent of some or all of the set of air tubes 70. The air tube inner diameter 70d of at least one air tube 70 can be larger than a cooling hole diameter 80d (e.g., a hydraulic diameter) of at least one of the set of cooling holes 80. For example and without limitation, the air tube inner diameter 70d can be at least at least two, three, four, or more times larger than the cooling hole diameter 80d. One or more of the set of cooling holes 80 can be disposed radially outward of one or more of the set of air tubes 70, relative to the fuel cup centerline 31a. Additionally or alternatively, one or more of the set of cooling holes 80 can be disposed radially inward of one or more of the set of air tubes 70, relative to the fuel cup centerline 31a. Additionally or alternatively, one or more of the set of cooling holes 80 can be disposed at substantially the same radial distance as one or more of the set of the air tubes 70, relative to the fuel cup centerline 31a. The set of cooling holes 80 can include cooling holes of different sizes, different shapes, or different sizes and shapes. The set of cooling holes 80 can include cooling holes disposed in an asymmetric arrangement, cooling holes disposed in a symmetric arrangement, or a combination of asymmetric and symmetric arrangements.

With some examples, the section 60 of the dome wall 46 can include the fuel inlet 82 that can be adapted for fluid coupling with the fuel nozzle 38, the swirler 52, other fluid circuits, or combinations thereof. An inner diameter 82d (e.g., a fuel inlet hydraulic diameter) of the fuel inlet 82 can be larger than the air tube inner diameter 70d. For example and without limitation, the fuel inlet inner diameter 82d can be at least twice as large as the air tube inner diameter 70d.

In some examples, the dome wall 46 can include a plate 62, a heat shield 64, or a plate 62 and a heat shield 64. The plate 62 can be disposed, at least in part, upstream or forward of the heat shield 64 (e.g., left of the heat shield 64 in FIG. 3). The plate 62, the heat shield 64, or the plate 62 and the heat shield 64 can include one or more of the set of air tubes 70. With some aspects, the plate 62 includes a first subset of the set of air tubes 70 and the heat shield includes a second subset of the set of air tubes 70. The first subset of the set of air tubes 70 can extend from the plate 62 rearward toward, into, or through the heat shield 64 (see first air tube 70₁). The second subset of the set of air tubes 70 can extend from the heat shield 64 forward, toward, into, or through the plate 62 (see second air tube 70₂).

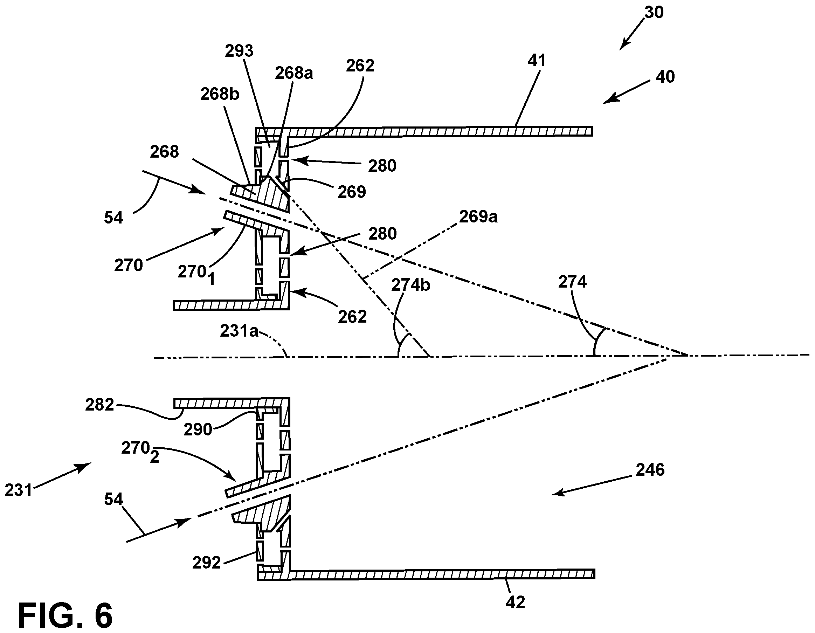

The dome wall 46 can include a set of impingement holes 90. The set of impingement holes 90 can be provided in the plate 62. Additionally or alternatively, the set of impingement holes 90 can be provided in one or more impingement baffles (see, e.g., impingement holes 290 of impingement baffle 292 in FIG. 6). The impingement holes 90 may fluidly couple an upstream fluid source and one or more portions of the dome wall 46, such as for cooling. For example, the set of impingement holes 90 of the plate 62 can provide the air 54 from the compressor section 12 (FIG. 1) to a forward/upstream surface 66 of the heat shield 64 to facilitate cooling of the heat shield 64. Additionally or alternatively, the set of impingement holes 90 of an impingement baffle can provide air 54 to the plate 62, the heat shield 64, or both. Some or all of the impingement holes 90 can be radially, circumferentially, or radially and circumferentially offset, relative to the fuel cup centerline 31a, from some or all of the cooling holes of the set of cooling holes 80.

One or more of the set of impingement holes 90 can be disposed radially outward of one or more of the set of air tubes 70, relative to the fuel cup centerline 31a. Additionally or alternatively, one or more of the set of impingement holes 90 can be disposed radially inward of one or more of the set of air tubes 70, relative to the fuel cup centerline 31a. Additionally or alternatively, one or more of the set of impingement holes 90 can be disposed at substantially the same radial distance as (and circumferentially offset from) one or more of the set of air tubes 70, relative to the fuel cup centerline 31a.

With some configurations, each dome wall section 60 can include a respective plate 62, a respective heat shield 64, or a respective plate 62 and a respective heat shield 64. In other configurations, one plate 62, one heat shield 64, or one plate 62 and one heat shield 64 can be utilized for a plurality of dome wall sections 60 such that a dome wall section 60 includes a portion of a plate 62, a portion of a heat shield 64, or portions of a plate 62 and a heat shield 64. As one non-limiting example, a dome wall section 60 could include all of a plate 62 and a portion of a heat shield 64, other portions of which can be included with other dome wall sections 60 of the same dome wall 46. The other dome wall sections 60 can each include a respective plate 62. As another non-limiting example, a dome wall section 60 can include all of a heat shield 64 and a portion of a plate 62, other portions of which can be included with other dome wall sections 60 of the same dome wall 46, and the other dome wall sections 60 can each include a respective heat shield 64.

In some examples, the plate 62, the heat shield 64, or the plate 62 and the heat shield 64 can be integrally formed, at least in part, with the combustor liner 40.

In embodiments with an impingement baffle (e.g., impingement baffle 292 of FIG. 6), the impingement baffle can include a single impingement baffle for the whole dome wall 46, a plurality of impingement baffles each provided to a respective plurality of dome wall sections 60, a plurality of impingement baffles each provided to a respective dome wall section 60, or a combination thereof.

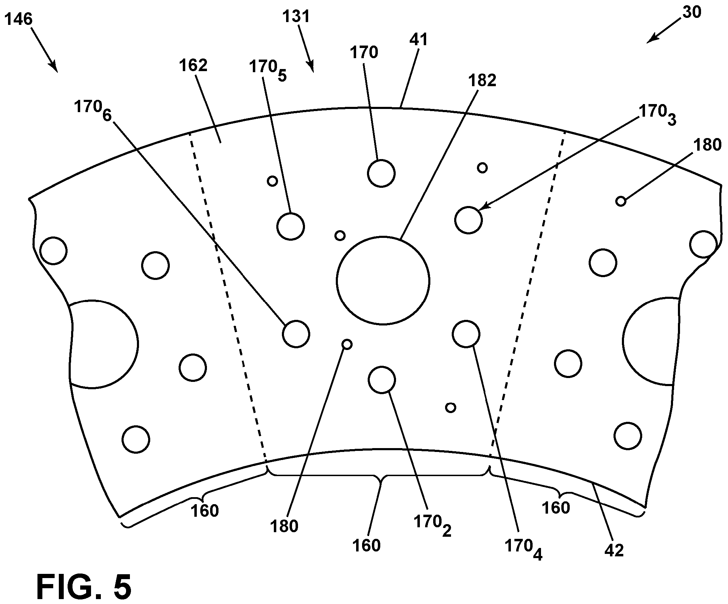

Referring to FIGS. 4 and 5, a dome wall 146 that can be utilized for a combustor 30 is illustrated. The dome wall 146 can include aspects similar to those of the dome wall 46; therefore, like parts will be described with like numerals further increased by 100, with it being understood that the description of the like parts of the dome wall 46 can apply to the dome wall 146, except where noted.

The dome wall 146 can include a fuel cup 131, a dome wall section 160, and a plate 162. With some configurations, the dome wall 146 may not include a heat shield. The fuel cup 131 and the dome wall section 160 can include at least portions of the plate 162. For example and without limitation, the plate 162 may extend across a plurality or all of the dome wall sections 160 of the dome wall 146. The plate 162 can include a fuel inlet 182 that can be centered with a centerline 131a of the fuel cup 131. The plate 162 can be coupled to the combustor liner 40. Additionally or alternatively, the plate 162 can be integrally formed with some or all of the combustor liner 40. The plate 162 can include a set of air tubes 170, a set of cooling holes 180, or a combination thereof. One or more of the set of cooling holes 180 can be disposed radially outside of one or more of the set of air tubes 170, relative to the fuel cup centerline 131a of the fuel cup 131. Additionally or alternatively, one or more of the set of cooling holes 180 can be disposed radially between one or more of the set of air tubes 170 and the fuel inlet 182, relative to the fuel cup centerline 131a. Additionally or alternatively, one or more of the set of cooling holes 180 can be disposed circumferentially between one or more pairs of air tubes of the set of air tubes 170.

One or more of the set of air tubes 170 can be integrally formed with the plate 162. An air tube centerline 171a of a portion 171 of at least one air tube 170 can be disposed at an angle 174 relative to the fuel cup centerline 131a. The angle 174 can include an acute angle such that the at least one air tube 170 directs air 54 into the combustion chamber 50 and radially toward the fuel cup centerline 131a, at least to some degree. For example, a portion 171 of one or more air tubes 170 can be perpendicular to a circumferential direction of the fuel cup centerline 131a such that the air tube centerline 171a intersects the fuel cup centerline 131a. Additionally or alternatively, a portion 171 of one or more air tubes 170 may not be perpendicular to the circumferential direction such that the air tube centerline 171a does not intersect the fuel cup centerline 131a. With such a portion 171, the portion 171 may direct air 54 radially inward, generally toward the fuel cup centerline 131a but not directly toward the fuel cup centerline 131a (e.g., the air tube centerline 171a can be angled radially inward such that it does not intersect the fuel cup centerline 131a). Additionally or alternatively, the angle 174 for one or more air tubes 170 can include an obtuse angle such that the one or more air tubes 170 direct air 54 into the combustion chamber 50 and radially away from the fuel cup centerline 131a, at least to some degree. Additionally or alternatively, the angle 174 for one or more air tubes 170 can include a 0 or 180 degree angle such that the one or more air tubes 170 direct air 54 into the combustion chamber 50 in a direction parallel to the fuel cup centerline 131a.

In some configurations, the set of air tubes 170 can include a subset of air tubes disposed at different oblique angles 174 relative to the fuel cup centerline 131a (e.g., the oblique angles 174 of different air tubes 170 may or may not be different). The angles of the set of air tubes 170 relative to the circumferential direction of the fuel cup centerline 131a may or may not vary between air tubes 170. The set of air tubes 170 can, in some examples, include a first air tube 170 and one or more additional air tubes, such as air tubes 170₂₋₆ (FIG. 5).

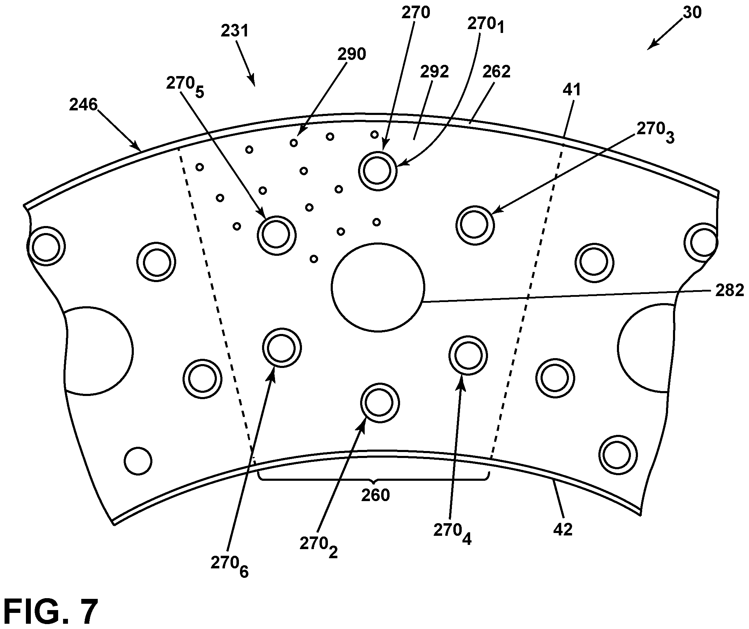

Referring to FIGS. 6 and 7, a dome wall 246 that can be utilized for a combustor 30 is illustrated. The dome wall 246 can include aspects similar to those of the dome wall 46 (FIG. 3), 146 (FIGS. 4 and 5); therefore, like parts will be described with like numerals further increased by 100, with it being understood that the description of the like parts of the dome wall 46, 146 can apply to the dome wall 246, except where noted.

The dome wall 246 can include a fuel cup 231, a dome wall section 260, a plate 262, a set of air tubes 270, a fuel inlet 282, and an impingement baffle 292. The fuel cup 231 and the dome wall section 260 can include at least portions of the plate 262 and the impingement baffle 292. The fuel cup 231 can include a fuel cup centerline 231a. The impingement baffle 292 can be coupled to the combustor liner 40, the plate 262, the dome wall 246, or a combination thereof, such as at least partially upstream of the plate 262. For example, the impingement baffle 292 can be fixed (e.g., brazed, welded, press fit, among others) with one or a combination of the outer liner 41, the inner liner 42, or the plate 262. The plate 262 can include a set of air tubes 270, at least some of which can extend (e.g., forward) into or through the impingement baffle 292. In some configurations, the impingement baffle 292 is fixed to one or more of the set of air tubes 270.

The impingement baffle 292 can include a set of impingement holes 290. At least some of the set of impingement holes 290 can be offset radially, circumferentially, or radially and circumferentially from the set of cooling holes 280 of the plate 262, relative to the fuel cup centerline 231a. For example, at least some of the impingement holes 290 can be disposed such that they are not directly aligned with the set of cooling holes 280. One or more of the set of impingement holes 290 can be disposed radially outside of the set of air tubes 270, relative to the fuel cup centerline 231a. Additionally or alternatively, one or more of the set of impingement holes 290 can be disposed radially between the set of air tubes 270 and a fuel inlet 282 of the plate, relative to the fuel cup centerline 231a. Additionally or alternatively, one or more of the set of impingement holes 290 can be disposed circumferentially between one or more pairs of air tubes of the set of air tubes 270.

With some aspects, the plate 262 can include one or more protrusions 268 extending away from the combustion chamber 50 (e.g., forward). At least one air tube of the set of air tubes 270 can be at least partially defined by the protrusion 268. The plate 262 can, for example, include a protrusion 268 for each air tube of the set of air tubes 270 or a single protrusion 268 for a plurality of air tubes of the set of air tubes 270. In some configurations, the protrusion 268 can include a cooling passage 269. A cooling passage centerline 269a of the cooling passage 269 can be disposed at a second oblique angle 274b relative to the fuel cup centerline 231a. The second oblique angle 274b can be different than an angle 274 of the set of air tubes 270 relative to the fuel cup centerline 231a. The cooling passage 269 can fluidly couple a space 293 between the impingement baffle 292 and the plate 262 with the combustion chamber 50. With some configurations, the cooling passage 269 is shorter or has a smaller diameter (e.g., a hydraulic diameter) than the at least one air tube 270, or is shorter and has a smaller diameter. The impingement baffle 292 can be coupled (e.g., fixed) to the plate 262 via the one or more protrusions 268. For example, the one or more protrusions 268 can include a forward axial surface 268a and a radial surface 268b, and the impingement baffle 292 can be fixed (e.g., brazed, welded, press fit, among others) with the forward axial surface 268a, the radial surface 268b, or both. In some configurations, the impingement baffle 292 can be coupled to the plate 262 only via one or more protrusions 268, but can be coupled to the plate 262, the combustor liner 40, or both in other manners in other configurations.

The set of air tubes 270 can, in some examples, include a first air tube 270₁ and one or more additional air tubes, such as air tubes 270₂₋₆. The dome wall 246, viewed from forward looking aft, is shown in FIG. 7. The dome wall 246, viewed from aft looking forward, may generally resemble the portions of the dome wall 146 illustrated in FIG. 5.

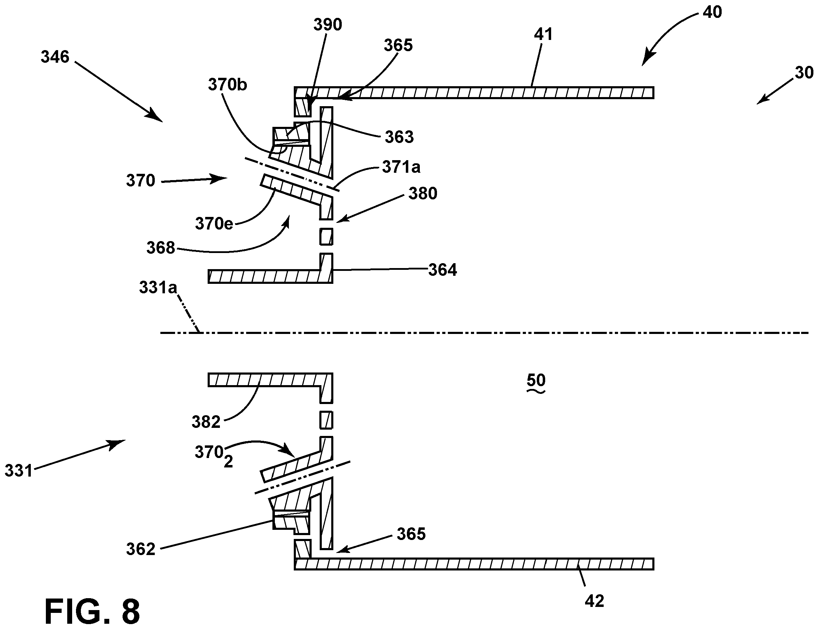

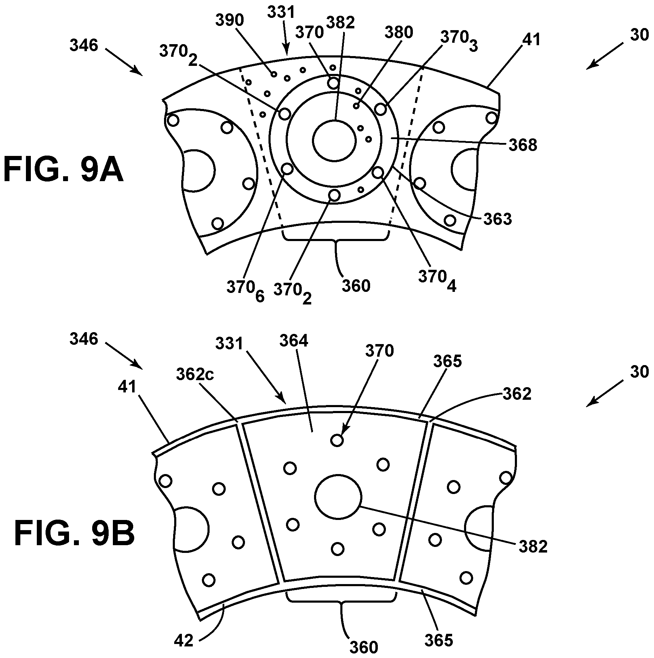

Referring to FIGS. 8, 9A, and 9B, a dome wall 346 that can be utilized for a combustor 30 is illustrated. The dome wall 346 can include aspects similar to those of the dome wall 46 (FIG. 3), 146 (FIGS. 4 and 5), 246 (FIGS. 6 and 7); therefore, like parts will be described with like numerals further increased by 100, with it being understood that the description of the like parts of the dome wall 46, 146, 246 can apply to the dome wall 346, except where noted.

The dome wall 346 can include a fuel cup 331, a dome wall section 360, a plate 362, a heat shield 364, a set of air tubes 370, and a fuel inlet 382. The heat shield 364 can be coupled to the plate 362. The fuel cup 331 and the dome wall section 360 can include at least portions of the plate 362 and the heat shield 364. The fuel cup 331 can include a fuel cup centerline 331a. The plate 362, the heat shield 364, or the plate 362 and the heat shield 364 can be coupled to the combustor liner 40. For example, in some aspects, the heat shield 364 can be fixedly coupled to the plate 362, and the plate 362 can be coupled to the combustor liner 40.

With some examples, the heat shield 364 can include a set of air tubes 370. One or more of the set of air tubes 370 can be coupled (e.g., fixed) to the plate 362, which can couple the heat shield 364 to the plate 362. Additionally or alternatively, the heat shield 364 can include a protrusion 368 that may define the set of air tubes 370 and be coupled (e.g., fixed) to or integrally formed with the plate 362. The protrusion 368 can be continuous or provided via separate segments. In some examples, the protrusion 368 can be annular. The heat shield 364 can at least partially overlap with the plate 362 in an axial direction, relative to the fuel cup centerline 331a. The heat shield 364 can be disposed such that a radial gap 365 is present between the heat shield 364 and the combustor liner 40, such as between the heat shield 364 and the outer liner 41, between the heat shield 364 and the inner liner 42, or both. A portion 362c of the plate 362 can be aligned with the radial gap 365 such that the heat shield 364 does not cover at least that portion 362c of the plate 362. The unshielded portion 362c may, for example, comprise 10% or less of the surface area of the plate 362 in the dome wall section 360.

With some aspects, the plate 362 can include a set of impingement holes 390 that may be disposed radially inward of the radial gap 365 relative to the fuel cup centerline 331a. Additionally or alternatively, the set of impingement holes 390 may be disposed at a radial distance from the fuel cup centerline 331a that is greater than a maximum radial extent for the set of air tubes 370. An inner diameter surface 363 of the plate 362 can be connected (e.g., fixed) to an outer radial surface 370b of the at least one of the set of air tubes 370. For example, with some configurations, the heat shield 364 can be fixed (e.g., brazed, welded, among others) to the plate 362 exclusively via the set of air tubes 370, but can be fixed to the plate 362, the liner 40, the annular protrusion 368, or a combination thereof in additional or alternative manners in other configurations. The outer radial surface 370b can be parallel to the fuel cup centerline 331a. Additionally or alternatively, the outer radial surface 370b may not be parallel to an air tube centerline 371a. In some configurations, the outer radial surface 370b can be provided at a forward end 370e of an air tube 370. The annular protrusion 368 can, in some aspects, include the outer radial surface 370b. The heat shield 364 can include a set of cooling holes 380. With some aspects, the heat shield 364 can include the fuel inlet 382, and the plate 362 may not include a portion of the fuel inlet 382.

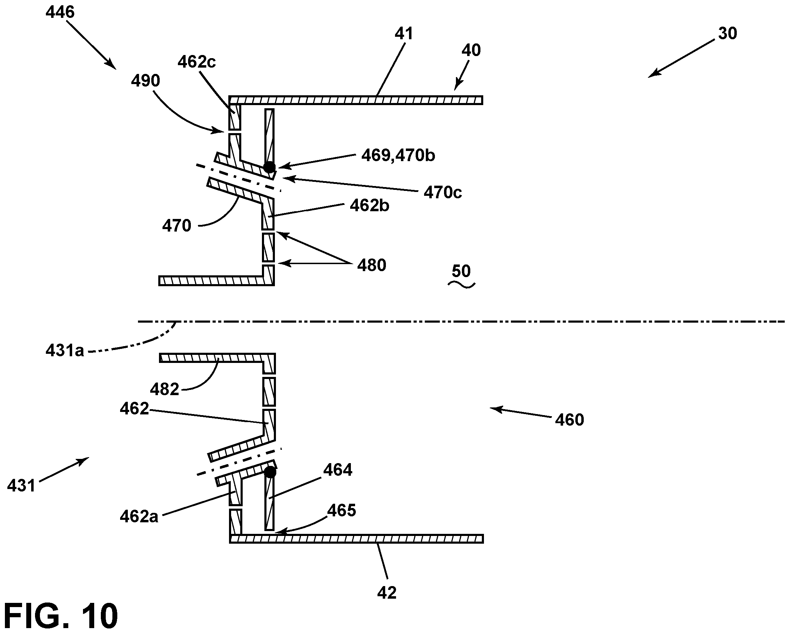

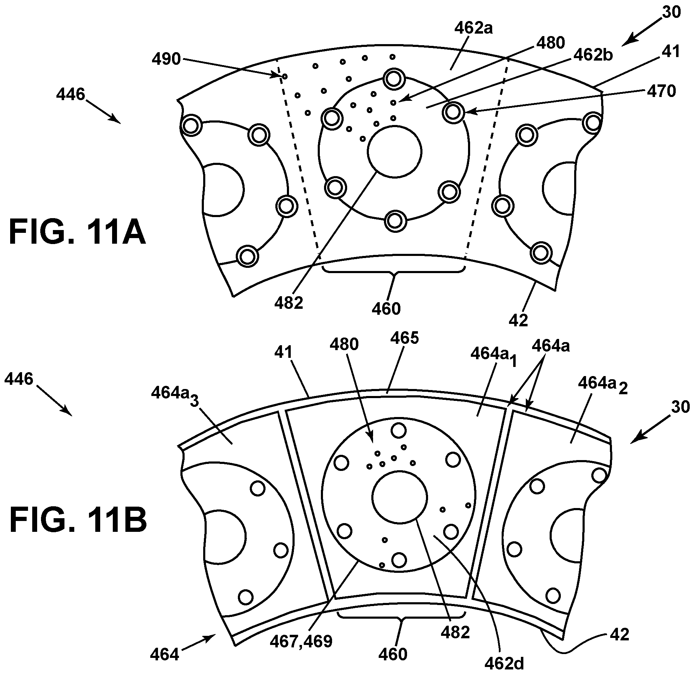

Referring to FIGS. 10, 11A, and 11B, a dome wall 446 that can be utilized for a combustor 30 is illustrated. The dome wall 446 can include aspects similar to those of the dome wall 46 (FIG. 3), 146 (FIGS. 4 and 5), 246 (FIGS. 6 and 7), 346 (FIGS. 8-9B); therefore, like parts will be described with like numerals further increased by 100, with it being understood that the description of the like parts of the dome wall 46, 146, 246, 346, can apply to the dome wall 446, except where noted.

The dome wall 446 can include a fuel cup 431, a dome wall section 460, a plate 462, a heat shield 464, a set of air tubes 470, and a fuel inlet 482. The fuel cup 431 and the dome wall section 460 can include at least portions of the plate 462 and the heat shield 464. The fuel cup 431 can include a fuel cup centerline 431a. The plate 462 can be coupled to the combustor liner 40. The heat shield 464 can be fixed to the plate 462. The plate 462 can include a set of air tubes 470. The heat shield 464 can be fixed to an outer radial surface 470b of a rear end 470c of at least one air tube 470 of the set of air tubes 470 (see, e.g., FIG. 10). For example, the heat shield 464 can include an aperture 467 having an edge 469, and the edge 469 can be fixed to the outer radial surface 470b of the rear end 470c of at least one air tube 470 of the set of air tubes 470. Additionally or alternatively, the edge 469 of the heat shield 464 can be fixed to an outer surface (e.g., an outer circumference) of a second plate section 462b of the plate 462. With some examples, the heat shield 464 can be coupled to the plate 462 exclusively via fixing the edge 469 to some or all of the set of air tubes 470, but can be coupled with additional or alternative configurations.

With some aspects, the plate 462 can include a first plate section 462a and a second plate section 462b axially offset from (e.g., downstream/rearward of) the first plate section 462a. The set of air tubes 470 can extend from the second plate section 462b forward to or beyond the first plate section 462a. Additionally or alternatively, the set of air tubes 470 can extend rearward beyond the second plate section 462b. The heat shield 464 can partially overlap with the first plate section 462a in an axial direction, relative to the fuel cup centerline 431a. The heat shield 464 can be disposed such that a radial gap 465 is present between the heat shield 464 and the combustor liner 40. A portion 462c of the first plate section 462a can be aligned with the radial gap 465 such that the heat shield 464 does not cover the portion 462c.

In some examples, the plate 462 can include a set of cooling holes 480, a set of impingement holes 490, or a combination thereof. For example, the first plate section 462a can include the set of impingement holes 490 for cooling the heat shield 464, the second plate section 462b, or both. Additionally or alternatively, the second plate section 462b can include the set of cooling holes 480, which may facilitate cooling of the second plate section 462b. The plate 462 can include a fuel inlet 482 that extends from the second plate section 462b axially forward toward or beyond an axial position of the first plate section 462a, such as for connection with the fuel nozzle 38 (FIG. 2), the swirler 52 (FIG. 2), or both. The heat shield 464 may not include a portion of the fuel inlet 482. The set of cooling holes 480 can include cooling holes disposed radially between outlets/rear ends 470c of the set of air tubes 470 and the fuel inlet 482. Additionally or alternatively, the set of cooling holes 480 can include cooling holes disposed circumferentially between the set of air tubes 470. In some examples, the plate 462, including one or more of the first plate section 462a, the second plate section 462b, the set of air tubes 470, or the fuel inlet 482, can be monolithic.

With some aspects, such as generally illustrated in FIG. 11B, the heat shield 464 can comprise a plurality of heat shield segments 464a (e.g., 464a₁, 464a₂, 464a₃) disposed adjacent to each other to form the heat shield 464. The heat shield segments 464a can, for example, include annular sector shapes with a respective aperture 467 disposed generally in the center and the segments 464a can be disposed to provide the heat shield 464 with an annular configuration. The area of the aperture 467 can, for example and without limitation, be at least 40% of an area of the heat shield segment 464a. The aperture 467 can be aligned with and define an unshielded portion 462c of the plate 462, which may comprise some or all of the second plate section 462b. The heat shield 464 and the second plate section 462b can be axially aligned, such as to define a rearward/aft surface of the dome wall 446. The set of air tubes 470 can extend forward from an unshielded portion 462d. For example, rear ends 470c of the set of air tubes 470 can be disposed at an outer circumference or perimeter of the unshielded portion 462c. The unshielded portion 462d can include the fuel inlet 482, the set of cooling holes 480, or both. The heat shield 464 may not include a portion of the fuel inlet 482. Each dome wall section 460 of the dome wall 446 can include a heat shield segment 464a of the heat shield 464. Additionally or alternatively, the plate 462 may extend to other dome wall sections 460, so each dome wall section 460 can include a respective portion of the plate 462, the first plate section 462a, the second plate section 462b, or a combination thereof.

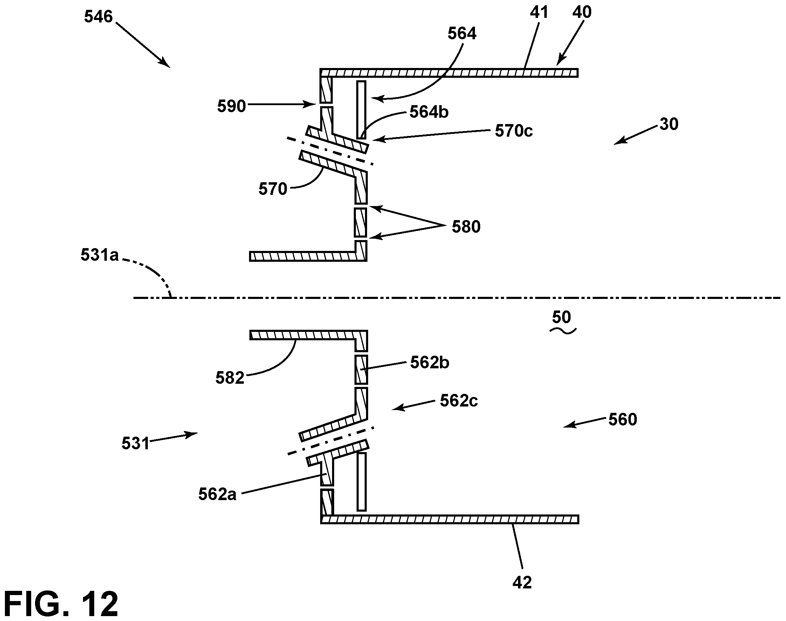

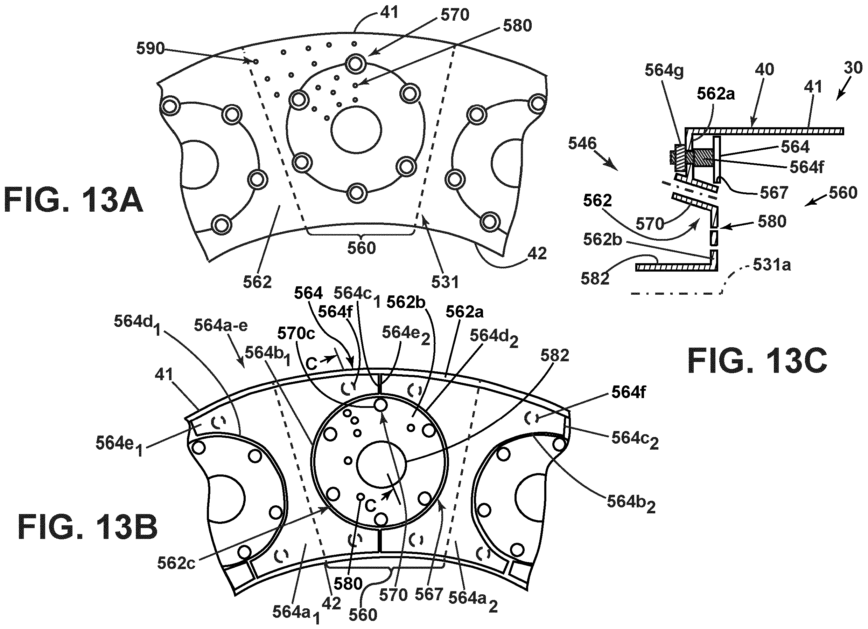

Referring to FIGS. 12-13C, a dome wall 546 that can be utilized for a combustor 30 is illustrated. The dome wall 546 can include aspects similar to those of the dome wall 46 (FIG. 3), 146 (FIGS. 4 and 5), 246 (FIGS. 6 and 7), 346 (FIGS. 8-9B), 446 (FIGS. 10-11B); therefore, like parts will be described with like numerals further increased by 100, with it being understood that the description of the like parts of the dome wall 46, 146, 246, 346, 446 can apply to the dome wall 546, except where noted.

The dome wall 546 can include a fuel cup 531, a dome wall section 560, a plate 562, a heat shield 564, a set of air tubes 570, and a fuel inlet 582. The fuel cup 531 and the dome wall section 560 can include at least portions of the plate 562 and the heat shield 564. The fuel cup 531 can include a fuel cup centerline 531a. The plate 562 can be coupled to the combustor liner 40. The plate 562 can include the set of air tubes 570. The plate 562 can include a first plate section 562a and a second plate section 562b axially offset from (e.g., downstream/rearward of) the first plate section 562a. The set of air tubes 570 can extend from the first plate section 562a to the second plate section 562b. Additionally or alternatively, the set of air tubes 570 can extend forward from the first plate section 562a. The heat shield 564 can be axially aligned with the second plate section 562b. The first plate section 562a can include a set of impingement holes 590, such as for impingement cooling of the heat shield 564.

With some aspects, such as generally illustrated in FIG. 13B, the heat shield 564 can include a plurality of heat shield segments 564a, including a first heat shield segment 564a₁ and a second heat shield segment 564a₂, that can be formed as separate components. The dome wall section 560 can include a portion (e.g., a first half) of the first heat shield segment 564a₁ and a portion (e.g., a second half) of the second heat shield segment 564a₂. The first heat shield segment 564a₁ and the second heat shield segment 564a₂ can be axially aligned with each other, axially aligned with the second plate section 562b, fixed to the first plate section 562a, or a combination thereof. A heat shield segment 564a, such as heat shield segments 564a₁₋₂, can include a generally H-shaped configuration defining a heat shield segment first recess 564b formed in a first circumferential side 564c₁ of the first heat shield segment 564a and a heat shield segment second recess 564d₂ formed in a second circumferential side 564e₂ of the heat shield segment 564a. For example, the first heat shield segment 564a₁ can include recesses 564b₁, 564d₁, and circumferential sides 564c₁, 564e₁. Additionally or alternatively, the second heat shield segment 564a₂ can include recesses 564b₂, 564d₂, and circumferential sides 564c₂, 564e₂. The first circumferential side 564c₁ of the first heat shield segment 564a₁ can be disposed adjacent the second circumferential side 564e₂ of the second heat shield segment 564a₂ such that the first heat shield segment first recess 564b₁ is aligned with the second heat shield segment second recess 564d₂ to at least partially define an aperture 567 of the heat shield 564. A center of the aperture 567 can be aligned with the fuel cup centerline 531a. The aperture 567 can be aligned with and define an unshielded portion 562c of the plate 562, which may comprise some or all of the second plate section 562b. The set of air tubes 570 can extend forward from the unshielded portion 562c. For example, rear ends 570c of the set of air tubes 570 can be disposed at or proximate an outer circumference or perimeter of the unshielded portion 562c. The unshielded portion 562c can include a fuel inlet 582, cooling holes 580, or both. With some examples, some pairs or each pair of adjacent dome wall sections 560 can include one full heat shield segment 564a and a half of two other heat shield segments 564a.

In some examples, such as generally illustrated in FIG. 13C, which is a partial cross-sectional view along line C-C of FIG. 13B, the heat shield 564 can be fixed to the plate 562, such as to the first plate section 562a. For example, the heat shield 564 can include a set of protrusions or fasteners 564f that extend forward from the heat shield 564 at least one of toward, into, or through the first plate section 562a. At least one fastener 564f can, for example, be welded, brazed, press-fit, or fastened via a nut 564g (e.g., if the fastener 564f includes threads) to the first plate section 562a. The fastener 564f can, with some examples, be integrally formed with the heat shield 564 or a segment 564a (FIG. 13B) thereof. In other examples, the fastener 564f can be formed separately from the heat shield 564 (e.g., as a bolt, screw, rivet, among others). In yet other examples, a heat shield 564 can include a mixture of integrally formed and separately formed fasteners 564f. The fasteners 564f can, in some configurations, be disposed at or proximate ends of the legs of an H-shaped heat shield segment 564a.

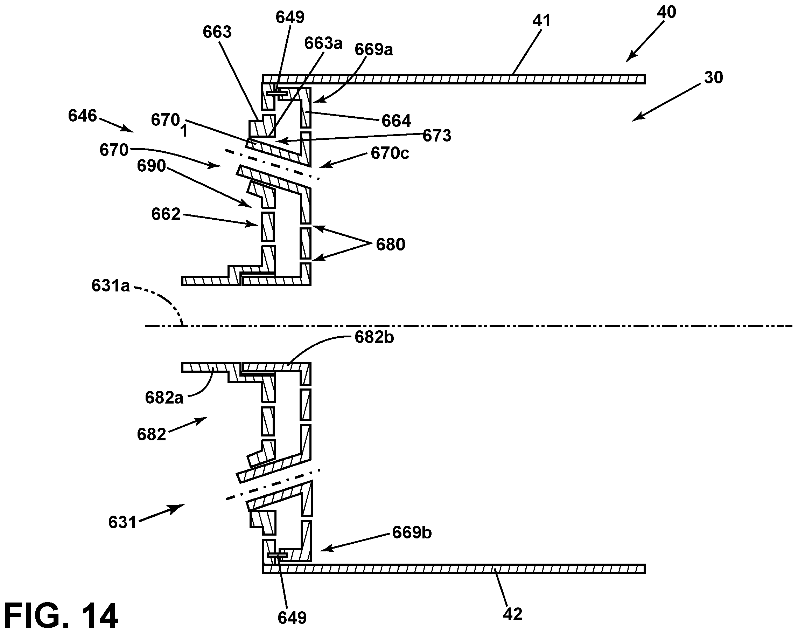

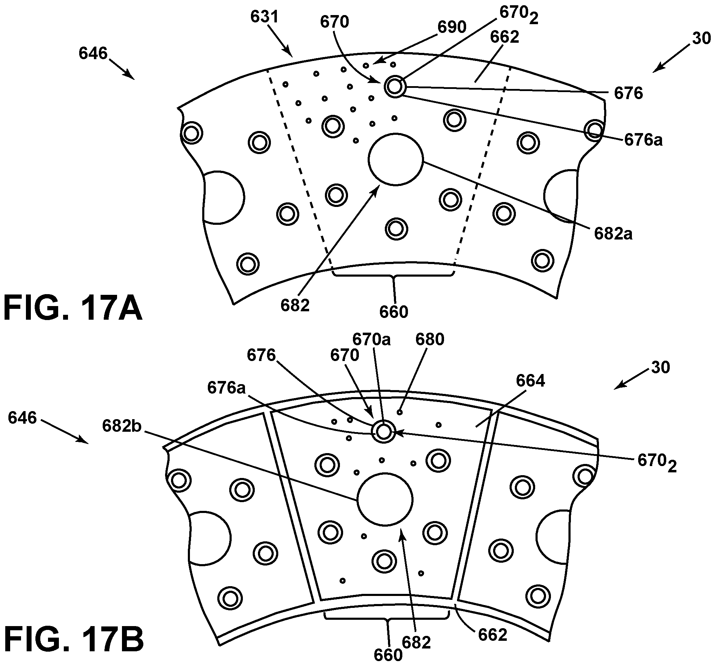

Referring to FIGS. 14-17B, a dome wall 646 that can be utilized for a combustor 30 is illustrated. The dome wall 646 can include aspects similar to those of the dome wall 46 (FIG. 3), 146 (FIGS. 4 and 5), 246 (FIGS. 6 and 7), 346 (FIGS. 8-9B), 446 (FIGS. 10-11B), 546 (FIGS. 12-13C); therefore, like parts will be described with like numerals further increased by 100, with it being understood that the description of the like parts of the dome wall 46, 146, 246, 346, 446, 546 can apply to the dome wall 646, except where noted.

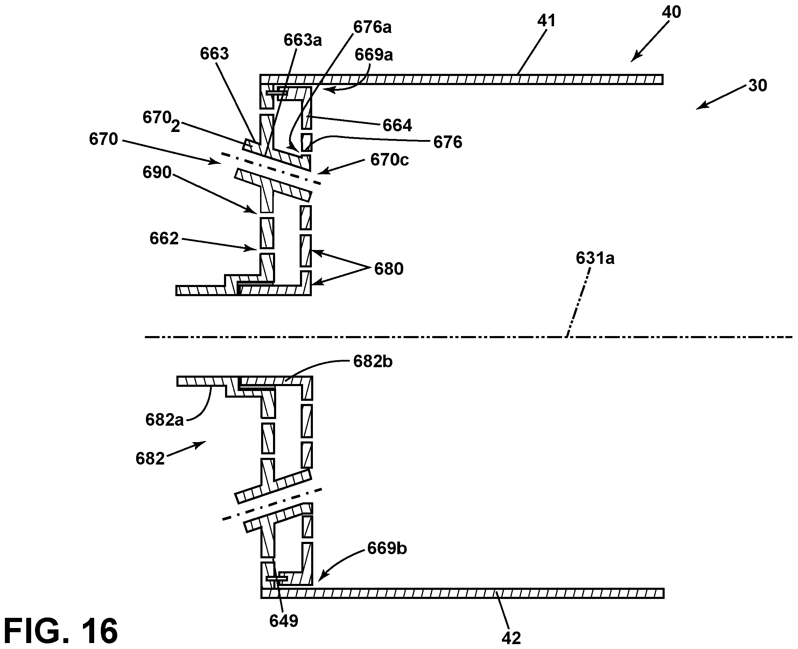

The dome wall 646 can include a fuel cup 631, a dome wall section 660, a plate 662, a heat shield 664, a set of air tubes 670, and a fuel inlet 682. The fuel cup 631 and the dome wall section 660 can include at least portions of the plate 662 and the heat shield 664. The fuel cup 631 can include a fuel cup centerline 631a. The plate 662 can be coupled to the combustor liner 40, and the heat shield 664 can be coupled to the plate 662. The heat shield 664 can include one or more first air tubes 670₁ of the set of air tubes 670 (see, e.g., FIG. 14). Additionally or alternatively, the plate 662 can include one or more second air tubes 670₂ of the set of air tubes 670 (see, e.g., FIG. 16). In some configurations, the plate 662 can include one or more first air tubes 670₁ of the set of air tubes 670, and the heat shield 664 can include one or more second air tubes 670₂ of the set of air tubes 670, or vice versa. For example, the views shown in FIGS. 14 and 16 can represent two cross sections of the same fuel cup 631 offset from each other about the fuel cup centerline 631a.

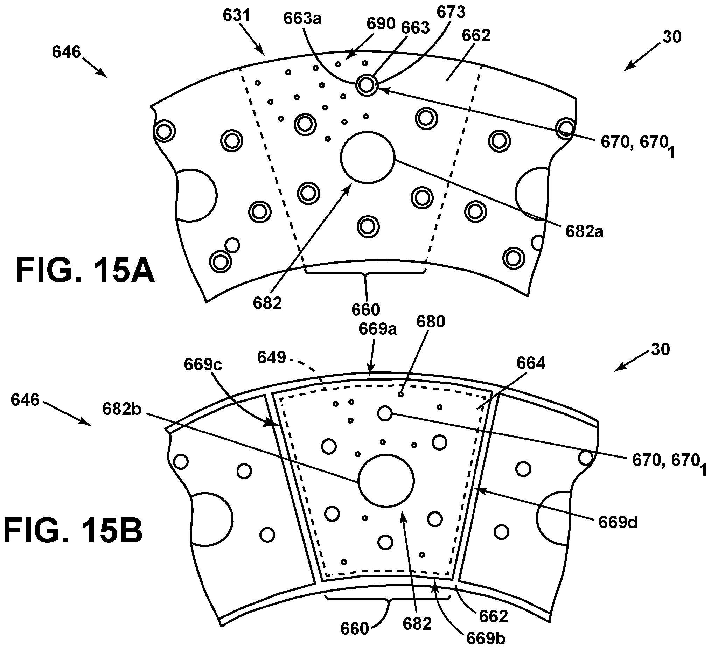

With some aspects, a dome wall 646 can include a seal 649 that can provide a fluid seal between portions of the plate 662 and the heat shield 664. The shape of the seal 649 can correspond to the shape of the plate 662, the shape of the heat shield 664, including segments thereof, or a combination of the shapes of the plate 662 and the heat shield 664. The seal 649 can, with some aspects, include respective segments disposed at an outer edge portion 669a of the heat shield 664, an inner edge portion 669b of the heat shield 664, a first circumferential edge 669c, a second circumferential edge 669d, or a combination thereof (see, e.g., FIG. 15B). The segments of the seal 649 can be formed separately, or two or more segments can be integrally formed.

In some examples, the plate 662 can include a first portion 682a of the fuel inlet 682 and the heat shield 664 can include a second portion 682b of the fuel inlet 682. At least some of the outer surface of the second portion 682b can be fixed (e.g., brazed, welded, press fit, among others) to an inner surface of the first portion 682a.

The plate 662 can include a set of impingement holes 690 located radially inward of the set of air tubes 670, located radially outward of the set of air tubes 670, circumferentially between the set of air tubes 670, or a combination thereof.

Referring to FIG. 14, the heat shield 664 can include one or more air tubes 670₁, and the plate 662 can include a set of flanges 663 that may define respective apertures 663a. The set of air tubes 670₁ can extend forward from the heat shield 664 into or through the set of flanges 663. The set of flanges 663 can, for example, include an annular or cylindrical configuration and can be parallel or inclined relative to the fuel cup centerline 631a. The set of flanges 663 can include a single continuous flange or a plurality of separate sections. The set of air tubes 670₁ can be disposed such that a gap 673 (e.g., a radial gap) is present between the set of flanges 663 and the set of air tubes 670₁. The gap 673 may, for example, provide space to accommodate for relative thermal growth between the plate 662 and the set of air tubes 670₁. The heat shield 664 can include a set of cooling holes 680 that can be disposed radially outward of a rear portion or end 670c of at least one of the set of air tubes 670₁, radially inward of the rear portion or end 670c of at least one of the set of air tubes 670₁, circumferentially between two or more of the set of air tubes 670₁, or a combination thereof. The plate 662 can include one or more of the set of impingement holes 690 disposed radially inward of the set of flanges 663, radially outward of the set of flanges 663, circumferentially between the set of air tubes 670, or a combination thereof.

Referring to FIG. 16, the plate 662 can include one or more of the set of air tubes 670₂ that can extend rearward from the plate 662 into the heat shield 664, such as into one or more air tube apertures 676. The rear portions or ends 670c of the one or more air tubes 670₂ can be disposed in the one or more air tube apertures 676 of the heat shield 664 such that a gap 676a is present between the rear portion or end 670c and the heat shield 664. The gap 676a can, for example, provide space to accommodate for relative thermal growth between the air tube 670₂ and the heat shield 664, between the plate 662 and the heat shield 664, or a combination thereof. At least a subset of the set of cooling holes 680 can be disposed radially outward of the one or more apertures 676, radially inward of the one or more apertures 676, circumferentially between apertures 676, or a combination thereof.

A radial extent of the heat shield 664 can, for example, be equal to or between 90% and 100% of a radial extent of the plate 662 measured in a plane that extends through the combustor centerline 30a and through the fuel cup centerline 631a.

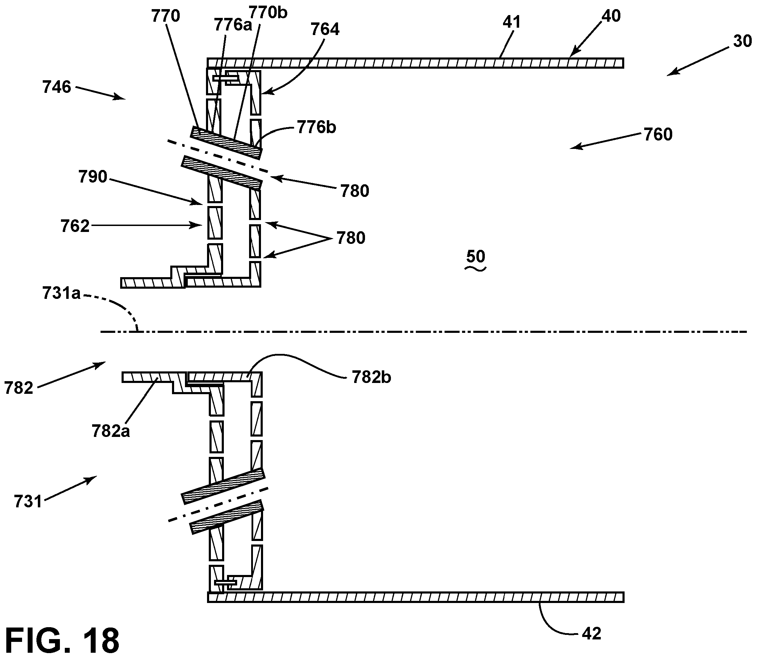

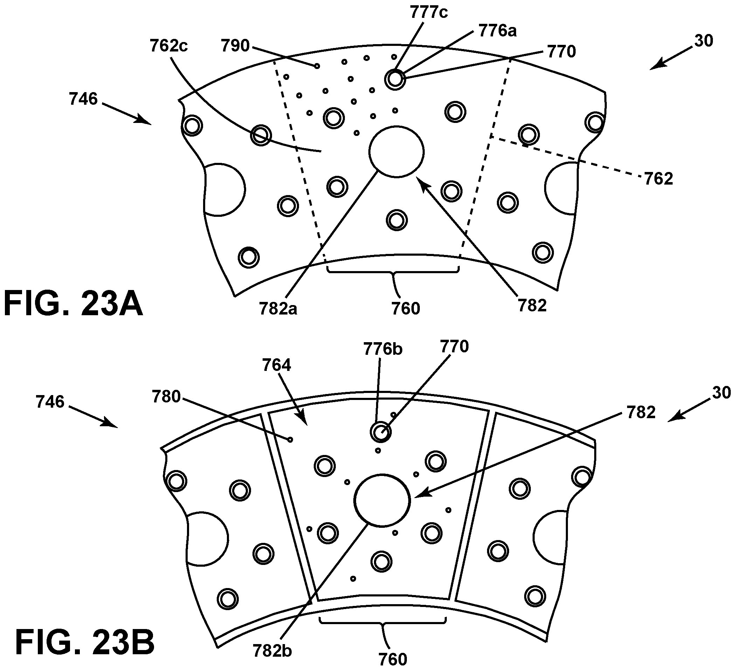

Referring to FIGS. 18-23B, a dome wall 746 that can be utilized for a combustor 30 is illustrated. The dome wall 746 can include aspects similar to those of the dome wall 46 (FIG. 3), 146 (FIGS. 4 and 5), 246 (FIGS. 6 and 7), 346 (FIGS. 8-9B), 446 (FIGS. 10-11B), 546 (FIGS. 12-13C), 646 (FIGS. 14-17B); therefore, like parts will be described with like numerals further increased by 100, with it being understood that the description of the like parts of the dome wall 46, 146, 246, 346, 446, 546, 646 can apply to the dome wall 746, except where noted.

The dome wall 746 can include a fuel cup 731, a dome wall section 760, a plate 762, a heat shield 764, a set of air tubes 770, and a fuel inlet 782. The fuel cup 731 and the dome wall section 760 can include at least portions of the plate 762, the heat shield 764, and the set of air tubes 770. The fuel cup 731 can include a fuel cup centerline 731a. The plate 762 can be coupled to the combustor liner 40, and the heat shield 764 can be coupled to the plate 762. The set of air tubes 770 can be formed separately from and connected to the plate 762, the heat shield 764, or the plate 762 and the heat shield 764. In some configurations, each of the set of air tubes 770 can be fixed (e.g., brazed, welded, press fit, fastened, among others) to one of the plate 762 and the heat shield 764, and floating relative to the other of the plate 762 and the heat shield 764, such as to compensate for relative thermal growth. The plate 762 and the heat shield 764 can include corresponding apertures 776a, 776b into which the set of air tubes 770 can be inserted. The apertures 776a, 776b can be offset in the radial direction. For example, at least some of the apertures 776a, 776b can be offset such that at least portions of the apertures 776a of the plate 762 are disposed radially outward of the apertures 776b of the plate 762, relative to the fuel cup centerline 731a. Additionally or alternatively, at least some of the apertures 776a, 776b can be offset such that at least portions of the apertures 776a of the plate 762 are disposed radially inward of the apertures 776b of the plate. Additionally or alternatively, at least some of the apertures 776a, 776b can be aligned with each other. The plate 762 can include a first portion 782a of the fuel inlet 782. The heat shield 764 can include a second portion 782b of the fuel inlet 782 that may be disposed at least partially in and fixed to the first portion 782a. The heat shield 764 can include a set of cooling holes 780.

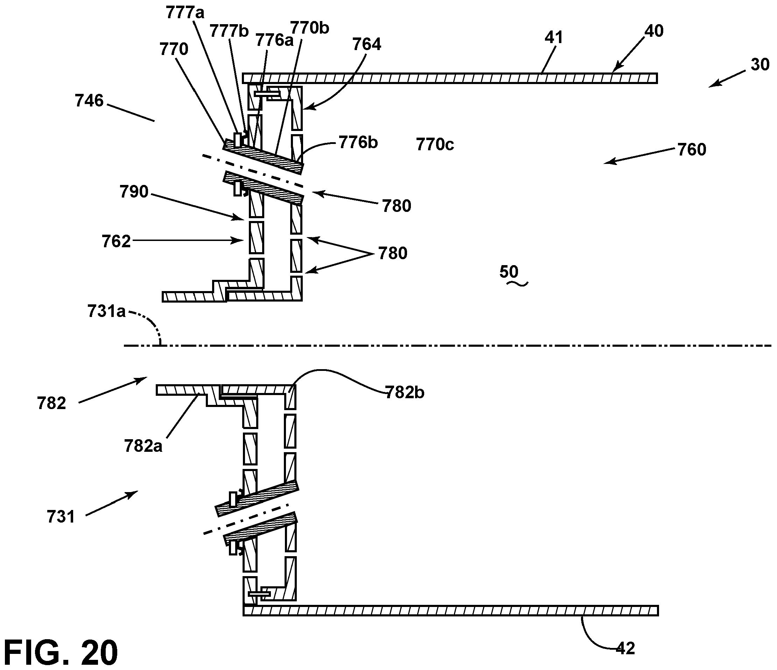

Referring to FIG. 20, one or more of the set of air tubes 770 can be connected to the plate 762 via at least one of a snap ring 777a or a seal 777b, such as a spring seal. Additionally or alternatively, a rear end 770c of the set of air tubes 770 can be fixed to the heat shield 764. The seal 777b can be adjacent or in contact with a forward surface 762c of the plate 762 and can restrict fluid flow between an outer surface 770b of the one or more of the set of air tubes 770 and the plate 762, which may improve impingement cooling of the heat shield 764 via a set of impingement holes 790 of the plate 762. The snap ring 777a can restrict movement of the seal 777b, such as to maintain the seal 777b in sealing contact with the plate 762.

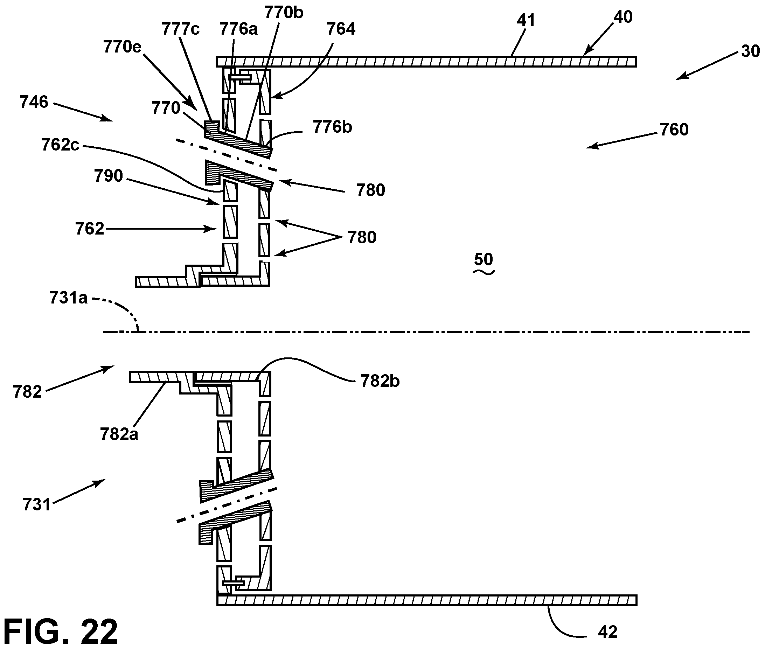

Referring to FIG. 22, one or more air tubes 770 of the set of air tubes 770 can comprise a discourager seal 777c. The discourager seal 777c can be adjacent or in contact with a forward surface 762c of the plate 762. In some examples, the discourager seal 777c can be integrally formed with the one or more air tubes 770, such as at or about a front end 770e of the one or more tubes 770. The discourager seal 777c can be adjacent or in contact with a forward surface 762c of the plate 762 and can restrict fluid flow between an outer surface 770b of the one or more of the set of air tubes 770 and the plate 762, which may improve impingement cooling of the heat shield 764 via the set of impingement holes 790 of the plate 762.

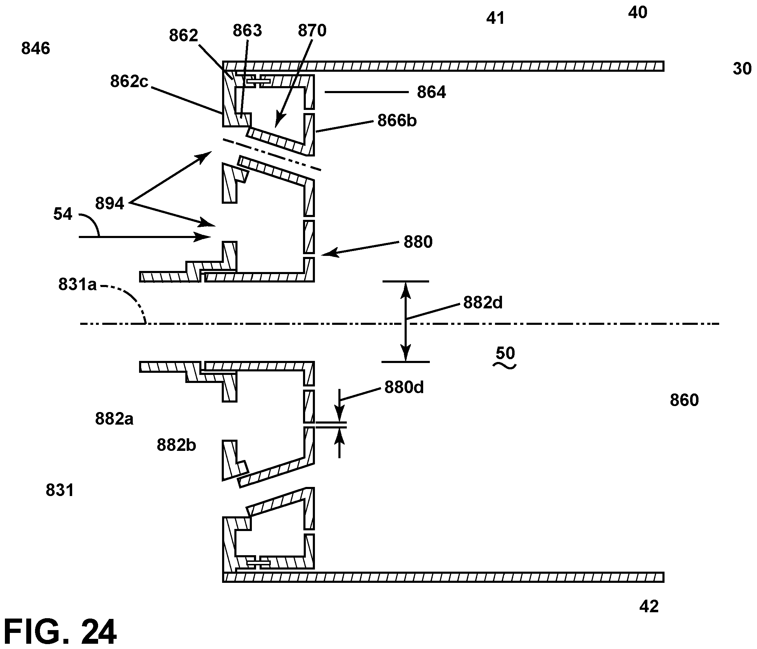

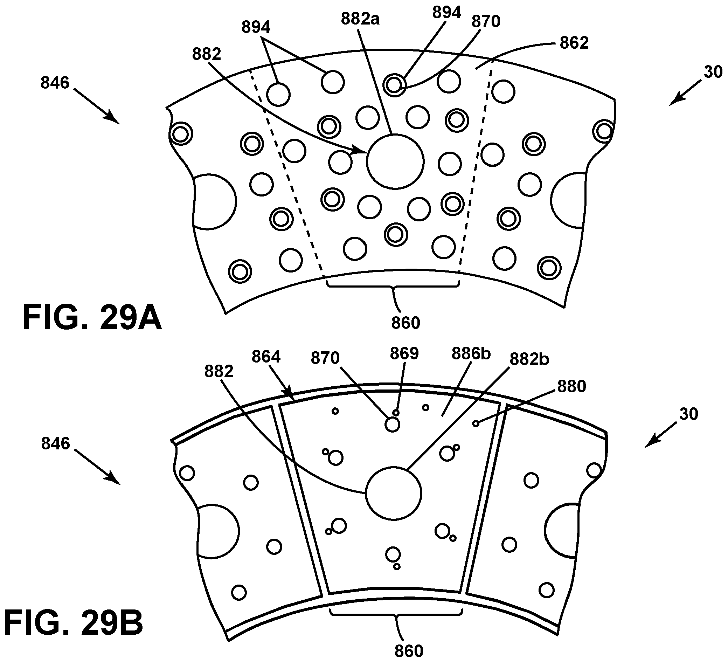

Referring to FIGS. 24-29B, a dome wall 846 that can be utilized for a combustor 30 is illustrated. The dome wall 846 can include aspects similar to those of the dome wall 46 (FIG. 3), 146 (FIGS. 4 and 5), 246 (FIGS. 6 and 7), 346 (FIGS. 8-9B), 446 (FIGS. 10-11B), 546 (FIGS. 12-13C), 646 (FIGS. 14-17B), 746 (FIGS. 18-23B); therefore, like parts will be described with like numerals further increased by 100, with it being understood that the description of the like parts of the dome wall 46, 146, 246, 346, 446, 546, 646, 746 can apply to the dome wall 846, except where noted.

The dome wall 846 can include a fuel cup 831, a dome wall section 860, a plate 862, a heat shield 864, and a fuel inlet 882. The fuel cup 831 and the dome wall section 860 can include at least portions of the plate 862 and the heat shield 864. The fuel cup 831 can include a fuel cup centerline 831a. The plate 862 can include a first portion 882a of the fuel inlet 882. The heat shield 864 can include a second portion 882b of the fuel inlet 882 that may be disposed at least partially in and fixed to the first portion 882a.

The plate 862 can be coupled to the combustor liner 40, and the heat shield 864 can be coupled to the plate 862. The heat shield 864 can include a set of air tubes 870. The set of air tube 870 can include air tubes that are integrally formed with the heat shield 864, air tubes that are formed separately from and then joined with the heat shield 864, or a combination thereof. One or more of the set of air tubes 870 can extend short of a forward surface 862c of the plate 862, and a set of cooling holes 880. For example, one or more of the set of air tubes 870 may extend into the plate 862 and may or may not extend beyond the plate 862. Additionally or alternatively, one or more of the set of air tubes 870 may extend forward toward and short of the plate 862. The plate 862 can include one or more flanges or raised portions 863 that extend rearward to interface with the set of air tubes 870. Additionally or alternatively, the plate 862 can be flat, at least in some portions.

With some aspects, the plate 862 can include a set of feeding holes 894. A feeding hole diameter 894d (e.g., a hydraulic diameter) of some or all of the set of feeding holes 894 can be larger than an air tube inner diameter 870d (e.g., a hydraulic diameter) of one or more of the set of air tubes 870, or can be larger than the inner diameter 870d and an outer diameter of the one or more air tubes 870. Additionally or alternatively, a cooling hole diameter 880d (e.g., a hydraulic diameter) of the set of cooling holes 880 can be less (e.g., half or less) than the air tube inner diameter 870d, the feeding hole diameter 894d, or both. The inner diameter 882d (e.g., a hydraulic diameter) of the fuel inlet 882 can be larger than the diameters of the air tubes 870, the set of cooling holes 880, and the set of feeding holes 894. A plate 862 may, in some examples, include the set of feeding holes 894 instead of impingement holes. The feeding holes 894 may be configured to minimally affect or not significantly affect the flow of air 54 to the heat shield 864.

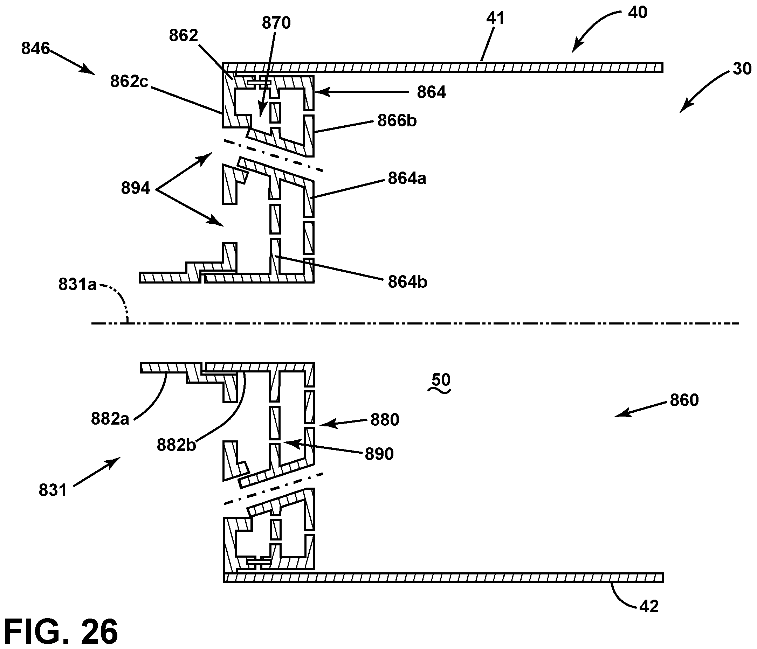

Referring to FIG. 26, the heat shield 864 can include a dual-wall configuration comprising a first heat shield wall 864a and a second heat shield wall 864b disposed axially between the first heat shield wall 864a and the plate 862. The first heat shield wall 864a can comprise the set of cooling holes 880. Additionally or alternatively, the second heat shield wall 864b can comprise a set of impingement holes 890 that may be configured to facilitate cooling of the first heat shield wall 864a. The set of impingement holes 890 may be radially offset, circumferentially offset, or radially and circumferentially offset from the cooling holes 880. The hydraulic diameters of the set of impingement holes 890 can, for example, be equal to or less than 50% of the hydraulic diameters of the set of air tubes 870.

One of more of the set of air tubes 870 can extend forward from the first heat shield wall 864a through the second heat shield wall 864b and at least partially into the plate 862. Additionally or alternatively, one or more of the set of air tubes 870 can extend froward from the first heat shield wall 864a and may extend to or short of the plate 862.

Some or all of the set of air tubes 870 and the heat shield 864, including the first heat shield wall 864a and the second heat shield wall 864b, can be formed as a monolithic component, such as via investment casting, additive manufacturing, or both. Additionally or alternatively, one or more of the set of air tubes 870 may be formed separate from and then attached to the heat shield 864, such as via welding, brazing, or other methods.

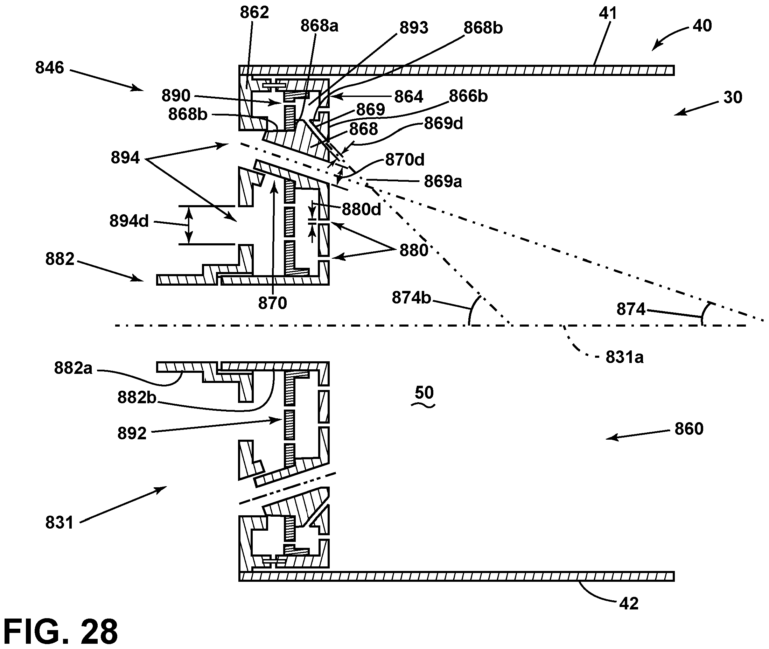

Referring to FIG. 28, the dome wall 846 can include an impingement baffle 892 that can be disposed between the heat shield 864 and the plate 862, such as instead of or in addition to a second heat shield wall 864b (FIG. 26). One of more of the set of air tubes 870 can extend forward from the heat shield 864 to, into, or through the impingement baffle 892 and short of, at least partially into, or through the plate 862.

With some aspects, the heat shield 864 can include a set of protrusions 868 extending away from the combustion chamber 50 (e.g., forward). At least one of the set of air tubes 870 can be at least partially defined by the set of protrusions 868. The set of protrusions 868 can, for example, include a protrusion for each of the set of air tubes 870. In some examples, the set of protrusions 868 can include a protrusion (e.g., an annular protrusion) that at least partially defines a plurality of air tubes 870. In some configurations, the set of protrusions 868 can include a set of cooling passages 869. A cooling passage centerline 869a of the set of cooling passages 869 can be disposed at a second angle 874b (e.g., an oblique or 0 or 180 degree angle) relative to the fuel cup centerline 831a. The second angle 874b can be different than an angle 874 (e.g., an oblique angle) of the set of air tubes 870 relative to the fuel cup centerline 831a. The cooling passage 869 can fluidly couple a space 893 between the impingement baffle 892 and the heat shield 864 with the combustion chamber 50. The set of cooling passages 869 can extend from a rear surface 866b of the heat shield 864 to an outer radial surface 868b of the protrusion 868. With some configurations, the cooling passage 869 can be shorter and have a diameter 869d (e.g., a hydraulic diameter) that is smaller than the diameter(s) 870d of the set of air tubes 870. The cooling passage 869 can be longer than the set of cooling holes 880. For example and without limitation, one or more of the set of cooling passages 869 can be at least three times longer than one or more of the set of cooling holes 880.

The impingement baffle 892 can be in contact with the set of protrusions 868. The impingement baffle 892 can be coupled (e.g., fixed) to the heat shield 864 via one or more of the set of protrusions 868. For example, one or more of the set of protrusions 868 can include a forward axial surface 868a and the outer radial surface 868b,, and the impingement baffle 892 can be fixed (e.g., brazed, welded, press fit, among others) with the forward axial surface 868a, the outer radial surface 868b, or both. In some configurations, the impingement baffle 892 can be coupled to the heat shield 864 exclusively via one or more of the set of protrusions 868, but can be coupled to the plate 862, the liner 40, or both, in additional or alternative manners in other configurations.

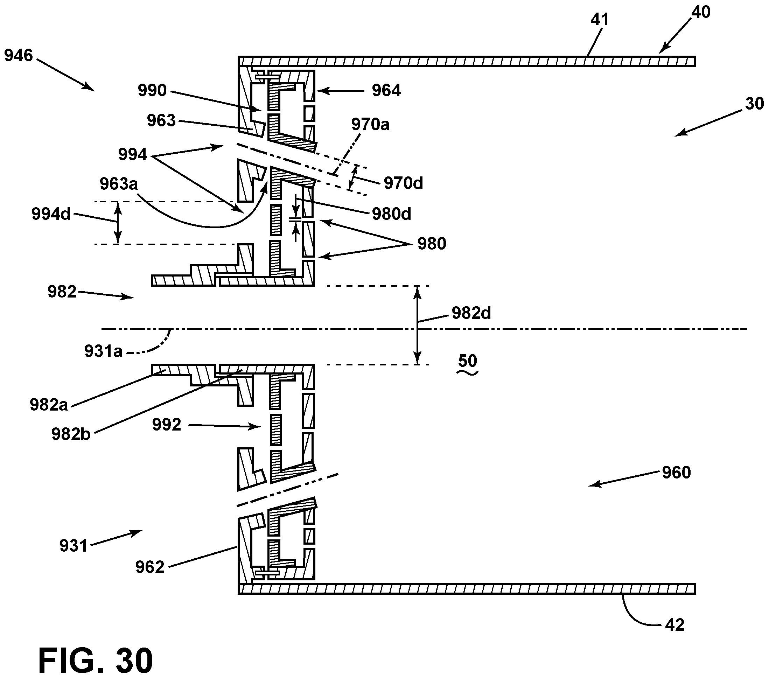

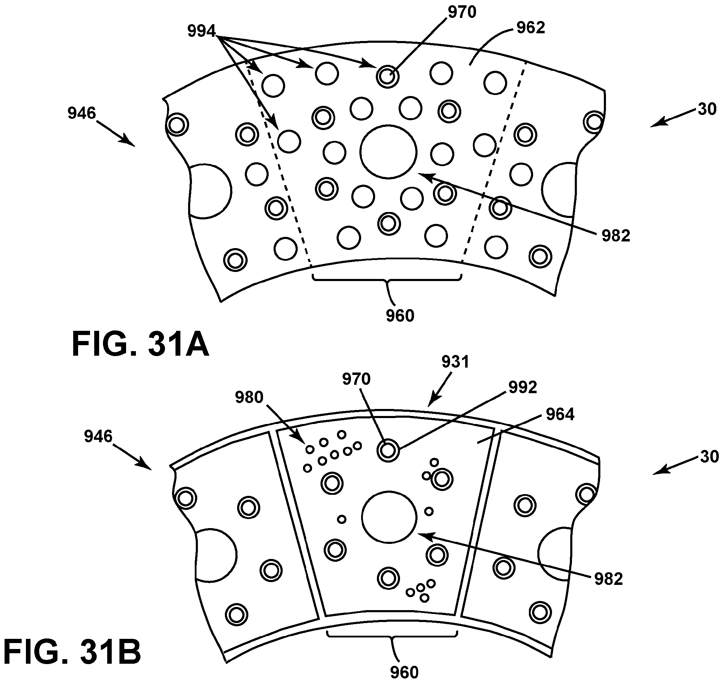

Referring to FIGS. 30, 31A, and 31B, a dome wall 946 that can be utilized for a combustor 30 is illustrated. The dome wall 946 can include aspects similar to those of the dome wall 46 (FIG. 3), 146 (FIGS. 4 and 5), 246 (FIGS. 6 and 7), 346 (FIGS. 8-9B), 446 (FIGS. 10-11B), 546 (FIGS. 12-13C), 646 (FIGS. 14-17B), 746 (FIGS. 18-23B), 846 (FIGS. 24-29B); therefore, like parts will be described with like numerals further increased by 100, with it being understood that the description of the like parts of the dome wall 46, 146, 246, 346, 446, 546, 646, 746, 846 can apply to the dome wall 946, except where noted.

The dome wall 946 can include a fuel cup 931, a dome wall section 960, a plate 962, a heat shield 964, a fuel inlet 982, and an impingement baffle 992. The fuel cup 931 and the dome wall section 960 can include at least portions of the plate 962, the heat shield 964, and the impingement baffle 992. The fuel cup 931 can include a fuel cup centerline 931a. The plate 962 can include a first portion 982a of the fuel inlet 982. The heat shield 964 can include a second portion 982b of the fuel inlet 982 that may be disposed at least partially in and fixed to the first portion 982a.

The plate 962 can be coupled to the combustor liner 40, the heat shield 964 can be coupled to the plate 962, and the impingement baffle 992 can be coupled to the heat shield 964. The impingement baffle 992 can be disposed between the plate 962 and the heat shield 964. The impingement baffle 992 can include a set of air tubes 970, a set of impingement holes 990, or both. The set of air tubes 970 can extend rearward from the impingement baffle 992 into or through the heat shield 964. Additionally or alternatively, the set of air tubes 970 can extend forward from the impingement baffle 992 into or through the plate 962. The dome wall 946 can, in some examples, include the impingement baffle 992 instead of or in addition to a second heat shield wall.

With some aspects, the plate 962 can include a set of feeding holes 994. A feeding hole diameter 994d (e.g., a hydraulic diameter) of some or all of the set of feeding holes 994 can be larger than an air tube diameter 970d (e.g., a hydraulic diameter) of one or more of the set of air tubes 970. Additionally or alternatively, cooling hole diameters 980d (e.g., hydraulic diameters) of a set of cooling holes 980 of the heat shield 964 can be less (e.g., half or less) than the air tube diameter 970d. A diameter 982d (e.g., a hydraulic diameter) of the fuel inlet 982 can be larger than the diameters 970d, 980d, 994d of the air tubes 970, the cooling holes 980, and the feeding holes 994. A plate 962 may, in some examples, include a set of feeding holes 994 instead of one or more of the set of impingement holes 990.

In some examples, the plate 962 can include a set of flanges 963 (e.g., extensions, projections, etc.) that may extend toward the set of air tubes 970 (e.g., rearward). The set of flanges 963 can include a flange for each of the set of air tubes 970. In other configurations, the set of flanges 963 can include a flange for each of a plurality groups/subsets of the set of air tubes 970. In yet other configurations, the set of flanges 963 can include a single flange for all of the set of air tubes 970. The set of flanges 963 can be annular and aligned with the air tube centerlines 970a. For example and without limitation, at least some of the set of flanges 963 can be tubular. The set of flanges 963 can extend short of the set of air tubes 970 such that a gap 963a (e.g., an axial gap) is present between the flange 963 and some or all of the set of air tubes 970. The presence of the gap 963a may result in leakage of air that may eventually pass through the impingement holes 990 of the impingement baffle 992.

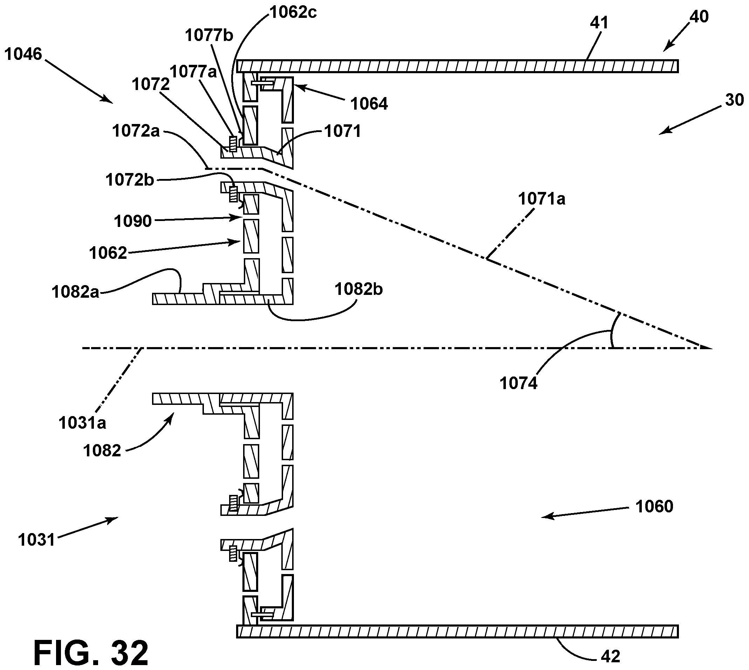

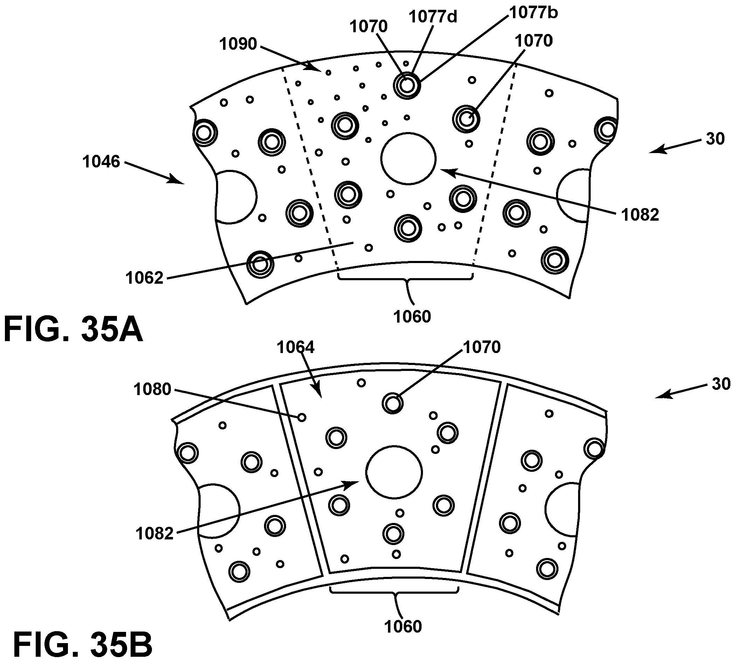

Referring to FIGS. 32-35B, a dome wall 1046 that can be utilized for a combustor 30 is illustrated. The dome wall 1046 can include aspects similar to those of the dome wall 46 (FIG. 3), 146 (FIGS. 4 and 5), 246 (FIGS. 6 and 7), 346 (FIGS. 8-9B), 446 (FIGS. 10-11B), 546 (FIGS. 12-13C), 646 (FIGS. 14-17B), 746 (FIGS. 18-23B), 846 (FIGS. 24-29B), 946 (FIGS. 30-31B); therefore, like parts will be described with like numerals further increased by 100, with it being understood that the description of the like parts of the dome wall 46, 146, 246, 346, 446, 546, 646, 746, 846, 946 can apply to the dome wall 1046, except where noted.

The dome wall 1046 can include a fuel cup 1031, a dome wall section 1060, a plate 1062, a heat shield 1064, and a fuel inlet 1082. The fuel cup 1031 and the dome wall section 1060 can include at least portions of the plate 1062 and the heat shield 1064. The fuel cup 1031 can include a fuel cup centerline 1031a. The plate 1062 can include a first portion 1082a of the fuel inlet 1082. The heat shield 1064 can include a second portion 1082b of the fuel inlet 1082 that may be disposed at least partially in and fixed to the first portion 1082a. The plate 1062 can be coupled to the combustor liner 40, and the heat shield 1064 can be coupled to the plate 1062, such as at the fuel inlet 1082. The heat shield 1064 can include a set of air tubes 1070 extending from the heat shield 1064 forward into and through the plate 1062.

One or more of the set of air tubes 1070 can include a first portion 1071 having a centerline 1071a, and can include a second portion 1072 extending forward from the first portion 1071 and having a centerline 1072a. The second portion centerline 1072a can be disposed an angle 1074 (e.g., an oblique or right angle) relative to the first portion centerline 1071a. In some configurations, the second portion centerline 1072a can be parallel with the fuel cup centerline 1031a. The first portion 1071 can extend forward from the heat shield to the second portion 1072, which may extend from the first portion 1071 to, into, or through the plate 1062.

The heat shield 1064 can include a set of cooling holes 1080. Additionally or alternatively, the plate 1062 can include a set of impingement holes 1090 that may be offset from the cooling holes 1080.

Referring to FIG. 32, with some aspects, the dome wall 1046 can include a snap ring 1077a and a seal 1077b (e.g., a spring seal). The snap ring 1077a and the seal 1077b may cooperate to sealing connect the outer surface of the second portion 1072 of an air tube 1070 with the plate 1062. For example, the seal 1077b may contact the second portion 1072, the forward surface 1062c of the plate 1062, or both. The snap ring 1077a may engage the second portion 1072 (e.g., a recess 1072b thereof) to limit axial movement of the seal 1077b, such as to maintain the seal 1077b in sealing contact with the plate 1062, the second portion 1072, or both.

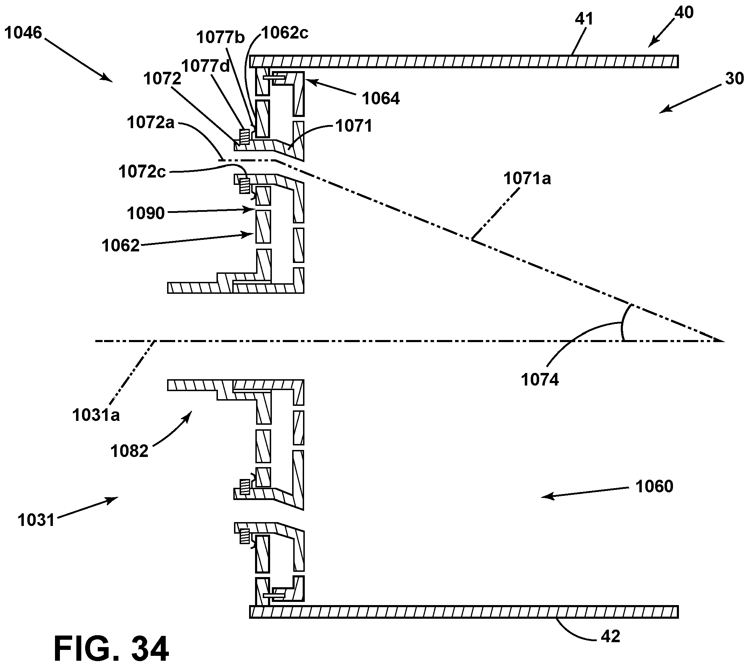

Referring to FIG. 34, with some aspects, the dome wall 1046 can include a nut 1077d and a seal 1077b (e.g., a spring seal). The nut 1077d and the seal 1077b may cooperate to provide a fluid seal between (e.g., prevent or restrict fluid flow between) the outer surface of the second portion 1072 of an air tube 1070 and the plate 1062. For example, the seal 1077b may contact the second portion 1072, the forward surface 1062c of the plate 1062, or both. The nut 1077d may engage the second portion 1072 (e.g., threads 1072c thereof), such as to limit axial movement of the seal 1077b, to adjust a preload on the seal 1077b, or a combination thereof.

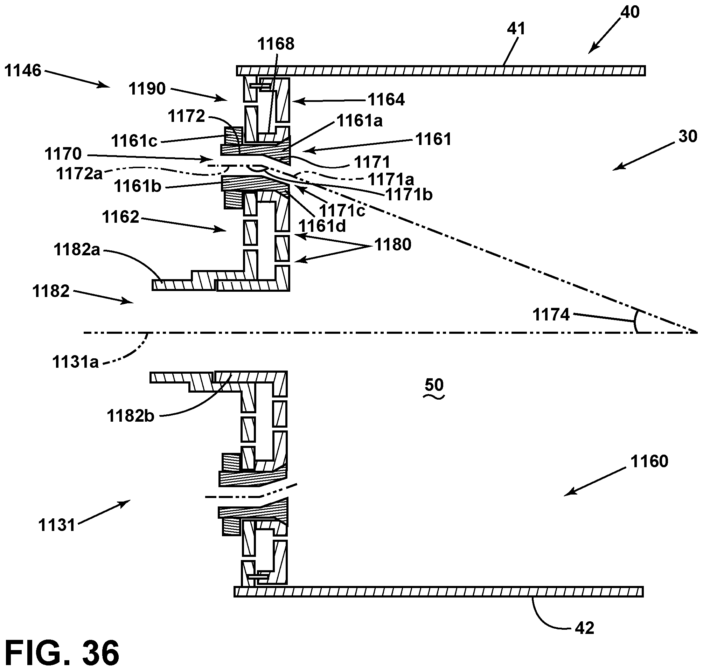

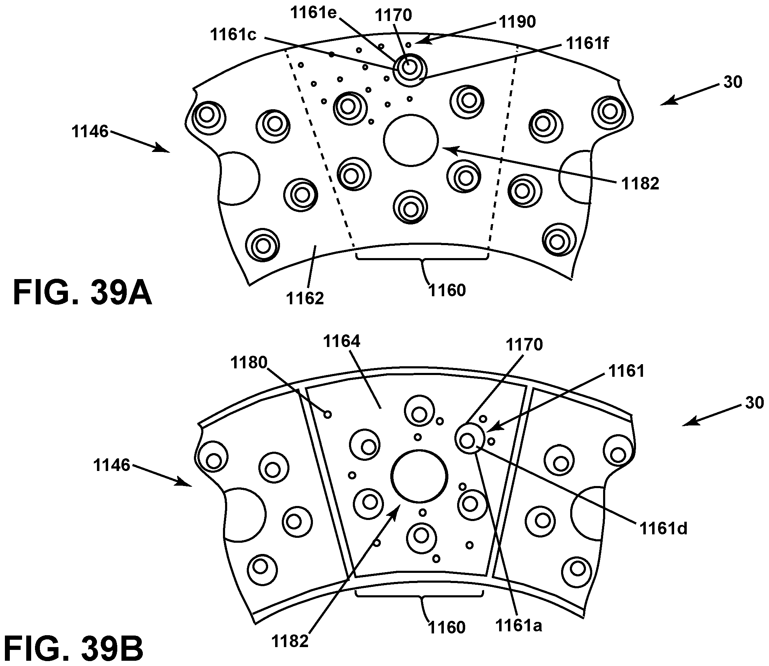

Referring to FIGS. 36-39B, a dome wall 1146 that can be utilized for a combustor 30 is illustrated. The dome wall 1146 can include aspects similar to those of the dome wall 46 (FIG. 3), 146 (FIGS. 4 and 5), 246 (FIGS. 6 and 7), 346 (FIGS. 8-9B), 446 (FIGS. 10-11B), 546 (FIGS. 12-13C), 646 (FIGS. 14-17B), 746 (FIGS. 18-23B), 846 (FIGS. 24-29B), 946 (FIGS. 30-31B), 1046 (FIGS. 32-35B); therefore, like parts will be described with like numerals further increased by 100, with it being understood that the description of the like parts of the dome wall 46, 146, 246, 346, 446, 546, 646, 746, 846, 946, 1046 can apply to the dome wall 1146, except where noted.

The dome wall 1146 can include a fuel cup 1131, a dome wall section 1160, a plate 1162, a heat shield 1164, and a fuel inlet 1182. The fuel cup 1131 and the dome wall section 1160 can include at least portions of the plate 1162 and the heat shield 1164. The fuel cup 1131 can include a fuel cup centerline 1131a. The plate 1162 can be coupled to the combustor liner 40, and the heat shield 1164 can be coupled to the plate 1162. The dome wall 1146 can include a set of fasteners 1161 and a set of air tubes 1170. The set of fasteners 1161 can, for example, fasten the heat shield 1164 to the plate 1162. In some configurations, the heat shield 1164 can be fixed to the plate 1162 exclusively via the set of fasteners 1161, but can be fixed to the plate 1162 in additional or alternative manners in other configurations. In some examples, the plate 1162 can include a first fuel inlet portion 1182a, and the heat shield 1164 can include a second fuel inlet portion 1182b. At least some of the second fuel inlet portion 1182b can be disposed in the first fuel inlet portion 1182a. The outer surface of second fuel inlet portion 1182b may be in tight contact with the inner surface of the first fuel inlet portion 1182a, which may or may not include a press-fit. The first and second fuel inlet portions 1182a, 1182b may or may not be fixed together via welding, brazing, or both.

In some examples, the set of fasteners 1161 may at least partially define the set of air tubes 1170. For example, the set of air tubes 1170 can extend through the set of fasteners 1161. The set of fasteners 1161 can include a head 1161a and a body 1161b (e.g., be configured as a bolt). The head 1161a can be disposed at least partially (e.g., countersunk) in the heat shield 1164. The body 1161b can extend from the heat shield 1164 into and through the plate 1162. The body 1161b can be at least partially threaded and engage a nut 1161c to fasten the heat shield 1164 with the plate 1162.

With some aspects, the heat shield 1164 can include a set of protrusions 1168 that can extend forward from the heat shield 1164 toward or to the plate 1162. The set of fasteners 1161 can extend through the protrusions 1168. For example, the set of protrusions 1168 may cover or shield the portions of the fasteners 1161 between the heat shield 1164 and the plate 1162. The set of protrusions 1168 can include a protrusion 1168 for each air tube 1170 and can include tubular configurations. Additionally or alternatively, the set of protrusions 1168 can include a protrusion for groups/subsets of the set of air tubes 1170 (e.g., multiple air tubes per protrusion). Alternatively, the set of protrusions 1168 can include a single protrusion for all of the set of air tubes 1170. In some configurations, an axial extent of the set of protrusions 1168 defines an axial separation between the plate 1162 and the heat shield 1164.

In some examples, one or more of the set of air tubes 1170 can include a first portion 1171 and a second portion 1172 upstream of the first portion 1171. The first portion 1171 can extend to a rear end 1170c of the one or more of the set of air tubes 1170. The rear end 1170c can be configured as the outlet of the air tube 1170. A centerline 1171a of the first portion 1171 may extend through a center of the rear end 1170c of the air tube 1170. At least one of the set of fasteners 1161 (e.g., a first fastener) can include a rear surface 1161d, which can be provided by the head 1161a, and the first portion 1171 can extend from the second portion 1172 rearward to the rear surface 1161d. The center of the first portion 1171 at the rear end/outlet 1170c (and the centerline 1171a) may be offset from the center of the rear surface 1161d, which may be aligned with a centerline 1172a of the second portion 1172. The heat shield 1164 can include a set of cooling holes 1180. The plate 1162 can include a set of impingement holes 1190, such as for impingement cooling of the heat shield 1164.

Referring to FIG. 36, the second portion centerline 1172a of the second portion 1172 of at least one of the set of air tubes 1170 can be parallel to the fuel cup centerline 1131a. The first portion centerline 1171a may be disposed at an oblique angle 1171b to the second portion centerline 1172a. For example, one or more of the set of air tubes 1170 can have an angled or bent configuration within a fastener 1161. The second portion 1172 having the centerline 1172a parallel with the fuel cup centerline 1131a may facilitate assembly of the dome wall 1146. A nut 1161c can be threaded onto the fastener 1161 and can be disposed parallel to the plate 1162, the heat shield 1164, or both. The first portion centerline 1171a can be disposed at an angle 1174 (e.g., an oblique angle) relative to the fuel cup centerline 1131a.

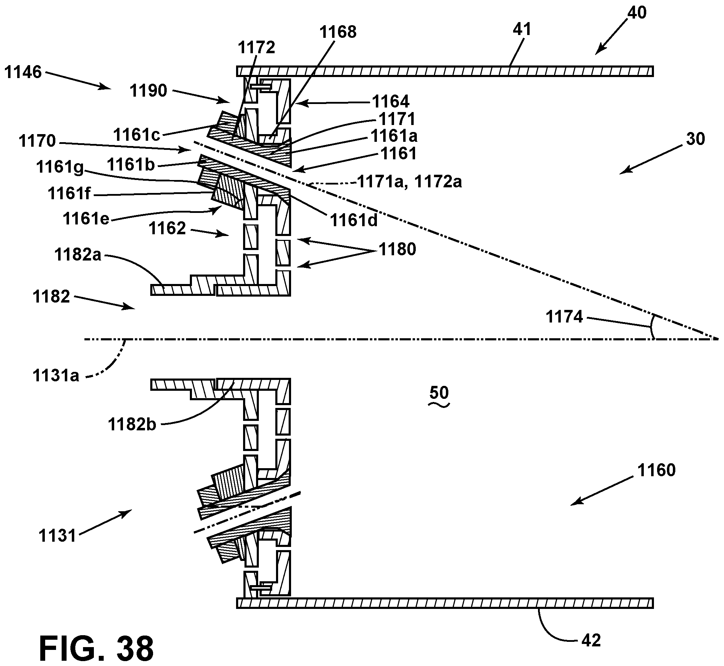

Referring to FIG. 38, at least one of the set of air tubes 1170 provided in the set of fasteners 1161 can include the first and second portions 1171, 1172, and the centerlines 1171a, 1172a can be parallel to each other and disposed at the angle 1174 relative to the fuel cup centerline 1131a. For example, at least some of the set of air tubes 1170 may be straight. The dome wall 1146 can include a nut 1161c and a wedge washer 1161e. The wedge washer 1161e can be disposed at least partially between and in contact with the plate 1162 and the nut 1161c. The nut 1161c can be engaged with the fastener 1161, which can be configured as a bolt. A shape of the wedge washer 1161e can correspond to the angle 1174. For example, the wedge washer 1161e may be angled to provide a fastening surface 1161f that contacts a nut 1161c that is perpendicular to one or both of the centerlines 1171a, 1172a. Additionally or alternatively, the wedge washer 1161e can include a triangular cross-sectional shape having a plurality of wedge washer angles 1161g, at least one of which can be equal to the angle 1174. In some configurations, the wedge washer 1161e can be integrally formed with the plate 1162. In other configurations, the wedge washer 1161e can be formed separately from the plate 1162. With the wedge washer 1161e, the corresponding nut 1161c can be disposed in contact with the fastening surface 1161f such that the nut 1161c is angled relative to the fuel cup centerline 1131 and perpendicular to the centerlines 1171a, 1172a.

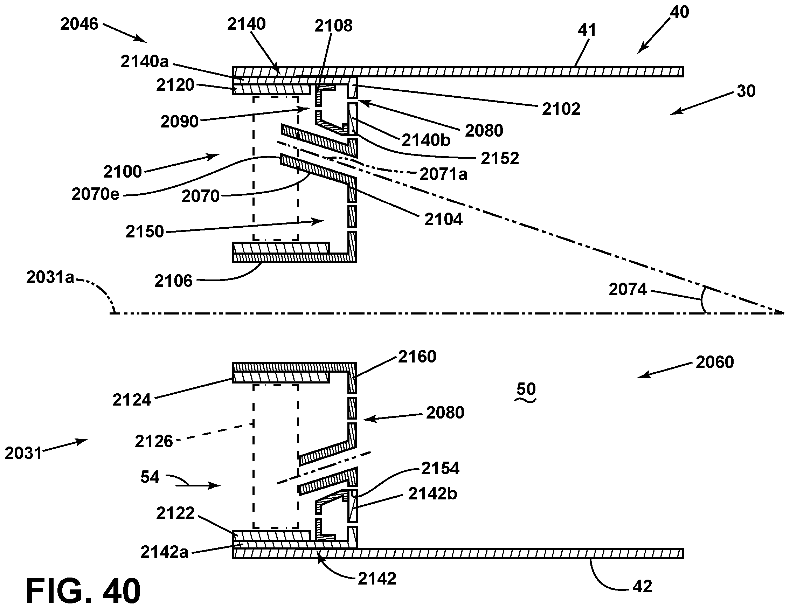

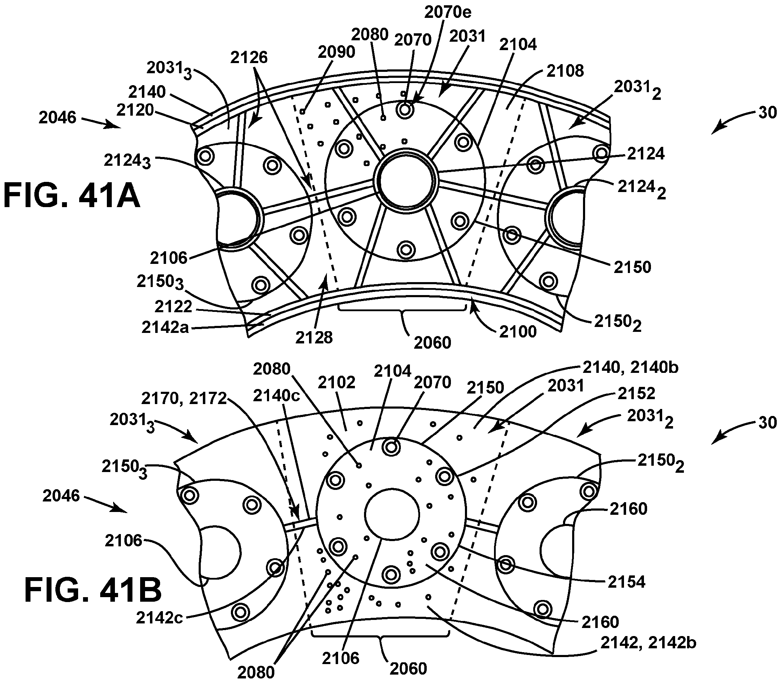

Referring to FIGS. 40, 41A, and 41B, a dome wall 2046 that can be utilized for a combustor 30 is illustrated. The dome wall 2046 can include a fuel cup 2031, a dome wall section 2060, a dome frame 2100, a first heat shield 2102, a second heat shield 2104, a fuel inlet 2106, and an impingement baffle 2108. The fuel cup 2031 and the dome wall section 2060 can include at least portions of the dome frame 2100, the first heat shield 2102, the second heat shield 2104, and the impingement baffle 2108. The fuel cup 2031 can include a fuel cup centerline 2031a. The first heat shield 2102 can be coupled to the combustor liner 40. The dome frame 2100 can be coupled to the first heat shield 2102. The second heat shield 2104 can be coupled to the dome frame 2100. The second heat shield 2104 can include a set of air tubes 2070. The set of air tubes 2070 can include centerlines 2071a that can be disposed at angles 2074 relative to the centerline 2031a.

Referring to FIGS. 40 and 41A, the dome frame 2100 can include an outer frame wall 2120, an inner frame wall 2122, a set of frame hubs 2124, and a plurality of frame struts 2126. The plurality of frame struts 2126 connect the outer frame wall 2120, the inner frame wall 2122, and the set of frame hubs 2124. In some configurations, one or more frame struts 2126 can connect (e.g., indirectly) the outer frame wall 2120 with the inner frame wall 2122 via the set of frame hubs 2124. Additionally or alternatively, one or more frame struts 2126 can extend from the outer frame wall 2120 to the inner frame wall 2122 to directly connect the walls 2120, 2122. The dome frame 2100 can, for example, be cast, forged and machined, stamped, fabricated from pieces joined together (e.g., via welding, brazing, riveting, among others), additively manufactured, or a combination thereof. The frame struts 2126 can extend between and connect (i) the outer frame wall 2120 and the set of frame hubs 2124, (ii) the inner frame wall 2122 and the set of frame hubs 2124, (iii) the outer frame wall 2120 and the inner frame wall 2122, (iv) multiple of the set of frame hubs 2124, or a combination thereof. Respective frame hubs of the set of frame hubs 2124 can be fixed to respective fuel inlets 2106. For example, one or more frame hubs 2124 can be brazed, welded, threaded, or a combination thereof with a respective fuel inlet 2106.

The dome frame 2100 can include a plurality of voids 2128 (FIG. 41A) disposed between and separating the frame struts 2126. The dome frame 2100 may be configured to provide structural support for the first heat shield 2102, the second heat shield 2104, the impingement baffle 2108, or a combination thereof, without materially affecting fluid flow (e.g., air 54) to other parts of the dome wall 2046, such as the first heat shield 2102, the second heat shield 2104, the impingement baffle 2108, or a combination thereof (FIG. 40). For example, the size of the frame struts 2126 may be minimized to provide sufficient structural support while providing minimized obstruction to the flow of air 54. The frame struts 2126 can be disposed such that they are offset from front ends/inlets 2070e of the air tubes 2070, and such that the front ends/inlets 2070e are aligned with one or more voids 2128. For example and without limitation, the frame struts 2126 may not overlap with the front ends/inlets 2070e in the axial direction. In some configurations, at least one air tube 2070 may extend forward from the second heat shield into a void of the one or more voids 2128.

The first heat shield 2102 can include a first section 2140 and a second section 2142. The first section 2140 may be disposed radially outward from the second section 2142, relative to the centerline 30a (FIG. 2) of the combustor 30. The first section 2140 and the second section 2142 can be formed separately from each other. The first section 2140 can be connected (e.g., fixed) to the outer liner 41. The first section 2140 can include a first portion 2140a that may extend in an axial direction (e.g., forward), and a second portion 2140b that may extend in a radial direction (e.g., relative to and inward toward the fuel cup centerline 2031a). The first portion 2140a may be fixed (e.g., brazed, welded, press-fit, bolted, among others) with the outer liner 41. The second portion 2140b may extend radially inward from a rear end of the first portion 2140a.

The second section 2142 can be connected (e.g., fixed) to the inner liner 42. The second section 2142 can include a first portion 2142a that may extend in the axial direction (e.g., forward) and a second portion 2142b that may extend in the radial direction (e.g., relative to and inward toward to the fuel cup centerline 2031a). The first portion 2142a may be fixed (e.g., brazed, welded, press-fit, among others) with the inner liner 42. The second portion 2142b may extend radially inward from a rear end of the first portion 2142a. The outer frame wall 2120 can be adjacent, connected to, or adjacent and connected to the first portion 2140a (e.g., a first section axial portion). The inner frame wall 2122 can be adjacent, connected to, or adjacent and connected to the first portion 2142a (e.g., a second section axial portion).

Referring to FIGS. 40 and 41B, in some examples, the first section 2140 and the second section 2142 define one or more apertures 2150. The second heat shield 2104 can be aligned (e.g., axially) with, disposed partially in, or aligned with and disposed at least partially in an aperture of the one or more apertures 2150. The first section 2140 can include a first recess 2152. The second section 2142 can include a second recess 2154. The first section 2140 and the second section 2142 can be disposed such that the recesses 2152, 2154 are aligned with each other to at least partially define an aperture 2150. In some configurations, at least one of the one or more apertures 2150 is circular and the recesses 2152, 2154 are semicircular. For example, the heat shield sections 2140, 2142 may include generally C-shaped configurations that open toward each other. Additionally or alternatively, a second heat shield wall 2160 of the second heat shield 2104 can be circular. The apertures 2150, recesses 2152, 2154, and second heat shield wall 2160 can include corresponding shapes other than circular or semi-circular.

Referring to FIG. 40, with some aspects, the second heat shield 2104 can include a second heat shield wall 2160 and the fuel inlet 2106. The fuel inlet 2106 can extend forward from the second heat shield wall 2160 and be adapted for connection with the fuel nozzle 38 (FIG. 2), the swirler 52 (FIG. 2), or the fuel nozzle 38 (FIG. 2) and the swirler 52 (FIG. 2). The second heat shield wall 2160 can be perpendicular to the fuel cup centerline 2031a. The second heat shield wall 2160 can be at least partially axially aligned with the first section second portion 2140b, the second section second portion 2142b, or the first section second portion 2140b and the second section second portion 2142b.

In some examples, the dome wall 2046 includes a set of cooling holes 2080. The first section second portion 2140b, the second section second portion 2142b, the second heat shield wall 2160, or a combination thereof can include one or more of the set of cooling holes 2080.

With some aspects, the impingement baffle 2108 can be connected to the first heat shield 2102, such as to facilitate cooling of the first heat shield 2102 (e.g., the second portions 2140b, 2142b). The impingement baffle 2108 can be disposed adjacent the first section first portion 2140a, the first section second portion 2140b, the second section first portion 2142a, the second section second portion 2142b, or a combination thereof. Cooling holes of the set of cooling holes 2080 that are covered by the impingement baffle 2108 (e.g., cooling holes in the first section second portion 2140b and the second section second portion 2142b) can have a lower pressure drop than other cooling holes of the set of cooling holes 2080, such as those in the second heat shield 2104.

In some configurations, the first heat shield 2102 and the second heat shield 2104 can each include one or more of the set of cooling holes 2080, and the impingement baffle 2108 can include a set of impingement holes 2090. For example, the first section second portion 2140b of the first heat shield 2102 can include a first cooling hole of the set of cooling holes 2080, the second heat shield wall 2160 can include a second cooling hole of the set of cooling holes 2080, and the impingement baffle 2108 can include at least one of the set of impingement holes 2090. The at least one of the set of impingement holes 2090 may, with some aspects, be offset from the first cooling hole 2080 of the first section second portion 2140b in a radial direction, a circumferential direction, or both, relative to the fuel cup centerline 2031a. Such a configuration may direct fluid through the impingement hole(s) 2090 into contact with the first section second portion 2140b (e.g., and not directly through a cooling hole 2080) to provide impingement cooling of the first heat shield 2102. The impingement baffle 2108 may, with some aspects, cover parts or substantially all of the forward surface of the first section second portion 2140b, the forward surface of the second section second portion 2142b, or both. Additionally or alternatively, the impingement baffle 2108 may not cover the forward surface of the second heat shield wall 2160. For example, the impingement baffle 2108 may not overlap with the aperture 2150.

In some examples, one or more of the set of air tubes 2070 can at least partially overlap with the impingement baffle 2108, the first section second portion 2140b, the second section second portion 2142b, or a combination thereof, when viewed from an axial direction. For example, an outer radial dimension of one or more air tubes 2070, relative to the fuel cup centerline 2031a, can be larger than an inner radial dimension of (i) the impingement baffle 2108, (ii) the first section second portion 2140b, (iii) the second section second portion 2142b, or a combination thereof. The one or more overlapping air tubes of the set of air tubes 2070 may not overlap with impingement holes 2090, such as to not restrict fluid flow (e.g., air 54) into the impingement holes 2090.

Referring to FIGS. 41A and 41B, the dome wall 2046 can include the fuel cup 2031 and one or more additional fuel cups, such as fuel cups 2031₂, 2031₃. The fuel cups 2031, 2031₂, 2031₃ can be circumferentially spaced relative to the centerline 30a (FIG. 2) of the combustor 30. The first and second sections 2140, 2142 of the first heat shield 2102 can cooperate to define the aperture 2150 and an additional aperture, such as apertures 2150₂, 2150₃, for each additional fuel cup 2031₂, 2031₃. For example, the first and second sections 2140, 2142 can include corresponding pairs of recesses 2152, 2154 for each fuel cup 2031₂, 2031₃.

Referring to FIG. 41A, the set of frame hubs 2124 can include a plurality of frame hubs 2124, including a respective frame hub 2124 for each fuel cup 2031, 2031₂, 2031₃, such as frame hubs 2124, 2124₂, 2124₃. The plurality of frame struts 2126 can connect the outer frame wall 2120, the inner frame wall 2122, and the plurality of frame hubs 2124. In some configurations, the dome wall 2046 can include an additional second heat shield 2104 for each additional fuel cup 2031.

Referring to FIG. 41B, with some aspects, the first and second sections 2140, 2142 can be disposed such that a set of cooling slots 2170 are present between the first section 2140 and the second section 2142. The cooling slots 2170 may (i) be disposed at an interface 2172 between the inner ends 2140c, 2142c of the sections 2140, 2142, (ii) extend generally in the circumferential direction, relative to the combustor centerline 31a, (iii) extend between adjacent fuel cups 2031, (iv) extend between second heat shields 2104 of adjacent fuel cups 2031, or a combination thereof. Additionally or alternatively, at least some of the inner ends 2140c, 2142c can be sealed together, such as via a seal (e.g., spline seal, leaf seal, others), welding, brazing, other methods, or a combination thereof, such that the interface 2172 is fluidly sealed.

With some aspects, an engine 10 (FIG. 1) can include a dome wall having one or more dome wall sections that have different configurations than one or more other dome sections of the dome wall. For example and without limitation, a dome wall can include a combination of dome wall sections 60, 160, 260, 360, 460, 560, 660, 760, 860, 960, 1060, 1160, 2060, as shown in FIGS. 3-41B, respectively.

Additionally or alternatively, a dome wall section can have various combinations of aspects of dome wall sections 60, 160, 260, 360, 460, 560, 660, 760, 860, 960, 1060, 1160, 2060, as shown in FIGS. 3-41B, respectively. For example and without limitation, a dome wall section can include various combinations of a plate having a first air tube, a heat shield having a second air tube, an impingement baffle having an air tube, a separately formed air tube fixed to one of the plate and the heat shield, an air tube with portions disposed at oblique angles relative to each other, an air tube that extends from the heat shield through the plate, an air tube that extends from the heat shield short of a forward surface of the plate, an impingement baffle having impingement holes, an air tube provided in a fastener, a dome frame, a dual-wall heat shield, a C-shaped heat shield, an H-shaped heat shield, a circular heat shield, a rectangular heat shield, a trapezoidal heat shield, a plate having offset plate sections, a protrusion having a cooling passage, or an air tube sealed to a plate, among others.

Many other possible aspects and configurations in addition to those shown in the above figures are contemplated by the present disclosure. The aspects disclosed herein can provide jets of air into a combustion chamber. Additionally or alternatively, aspects disclosed herein can improve cooling of a dome wall. The technical effects can include improved flame distribution, longer service time of the dome wall, or a combination thereof.

With some aspects, the disclosed combustors can allow for driving air flow through a set of air tubes with full dome pressure drop. At least some configurations can allow for driving air flow through the set of air tubes with full dome pressure drop and can allow for more effective, double pressure drop cooling of the dome wall. For example, the first part of the pressure drop can be provided via an impingement baffle and the second part can be provided on the hot face (e.g., downstream/rear face) of the dome wall.

With some aspects, the disclosed combustors can be utilized with gaseous fuel, such as hydrogen. Gaseous fuel, including hydrogen, spreads/disperses at a faster rate than atomized liquid fuel, which can involve less mixing time for the gaseous fuel, fuel mixing tube lengths can be shorter, and the flame from the gaseous fuel may be more likely to spread farther and faster, which can increase the risk of blowout and increase the impact of controlling the flame and limiting flame spread by controlling the dispersion of the gaseous fuel. Flame shaping formations, such as air tubes and flame shaping holes, can help contain gaseous fuel-air mixtures that have lower densities and higher velocities than with liquid fuels. For example, flame shaping formations can contain the gaseous fuel-air mixtures such that the flame velocity matches the flow velocity to provide a stable flame.

In some aspects, the gaseous fuel exits the fuel nozzle with a given speed and then mixes with air for combustion. As the fuel/air mixture burns, the flame propagates upstream. It can be desirable to control or maintain a constant flame in the combustor for ignition of subsequent fuel, and not to continually ignite the fuel with an ignitor.

Further aspects are provided by the subject matter of the following clauses:
A combustor for a turbine engine comprising: a dome wall; a combustor liner extending from the dome wall; and a combustion chamber at least partially defined by the dome wall and the combustor liner; wherein the dome wall includes: a fuel cup disposed at a dome wall section of the dome wall, the fuel cup comprising a fuel cup centerline; a set of air tubes extending at least partially through the dome wall section to direct air into the combustion chamber; and a set of cooling holes extending through the dome wall section.

The combustor of any preceding clause, wherein the set of cooling holes are parallel with the fuel cup centerline.

The combustor of any preceding clause, wherein the set of air tubes includes one or more air tubes including a portion having an air tube centerline disposed at an oblique angle relative to the fuel cup centerline.

The combustor of any preceding clause wherein the oblique angle is an acute angle such that the at least one air tube directs air into the combustion chamber and toward the fuel cup centerline.

The combustor of any preceding clause, wherein an air tube hydraulic diameter of the at least one air tube is at least two times larger than a cooling hole hydraulic diameter of at least one cooling hole of the set of cooling holes.

The combustor of any preceding clause, wherein the dome wall section includes a fuel inlet; and wherein a fuel inlet hydraulic diameter of the fuel inlet is at least twice as large as the air tube hydraulic diameter.

The combustor of any preceding clause, wherein the set of air tubes comprises at least two air tubes.

The combustor of any preceding clause, wherein the dome wall comprises a plate and a heat shield; wherein heat shield includes the set of air tubes; and wherein the set of air tubes extend forward from the heat shield toward or into the plate.

The combustor of any preceding clause wherein the plate includes a second set of air tubes; and wherein the second set of air tubes extend rearward from the plate toward or into the heat shield.

The combustor of any preceding clause, wherein the dome wall comprises a plate and a heat shield; wherein the plate includes the set of air tubes; and wherein the set of air tubes extend rearward from the plate toward or into the heat shield.

The combustor of any preceding clause, wherein the set of cooling holes includes cooling holes disposed radially outward of the set of air tubes and cooling holes disposed radially inward of the set of air tubes.

The combustor of any preceding clause, wherein the dome wall comprises a set of impingement holes.

The combustor of any preceding clause, wherein the set of impingement holes includes impingement holes disposed radially outward of the set of air tubes and impingement holes disposed radially inward of the set of air tubes.

The combustor of any preceding clause wherein the set of impingement holes are radially offset from the set of cooling holes.

The combustor of any preceding clause, wherein the dome wall section includes a plate; and wherein the plate is coupled to the combustor liner; and wherein the plate includes the set of air tubes and the set of cooling holes.

The combustor of any preceding clause, wherein the plate includes a fuel inlet adapted for connection with a fuel nozzle, a swirler, or the fuel nozzle and the swirler.

The combustor of any preceding clause, wherein the set of cooling holes includes cooling holes disposed radially outside of the set of air tubes, relative to the fuel cup centerline.

The combustor of any preceding clause, wherein the set of cooling holes includes cooling holes disposed radially between the set of air tubes and the fuel inlet, relative to the fuel cup centerline, cooling holes disposed circumferentially between the set of air tubes, or a combination thereof.

The combustor of any preceding clause, wherein at least one air tube of the set of air tubes is integrally formed with the plate.

The combustor of any preceding clause, wherein the set of air tubes includes a plurality of air tubes spaced about the dome wall section.

The combustor of any preceding clause, wherein the at least one air tube is not perpendicular to a circumferential direction relative to the fuel cup centerline.

The combustor of any preceding clause, wherein the set of air tubes includes a subset of air tubes disposed at different oblique angles to the circumferential direction relative to the fuel cup centerline.

The combustor of any preceding clause, wherein the set of cooling holes includes cooling holes of different sizes, different shapes, or different sizes and shapes.

The combustor of any preceding clause, wherein the set of cooling holes include cooling holes disposed in an asymmetric arrangement.

The combustor of any preceding clause, wherein the at least one air tube has a hydraulic diameter that converges toward the combustion chamber.

The combustor of any preceding clause, wherein the at least one air tube has a hydraulic diameter that diverges toward the combustion chamber.

The combustor of any preceding clause, wherein the at least one air tube includes a first air tube having a converging hydraulic diameter in a rearward direction; and wherein the at least one air tube includes a second air tube having a diverging hydraulic diameter in the rearward direction.

The combustor of any preceding clause, wherein the set of air tubes direct air radially inward or radially outward.

The combustor of any preceding clause, wherein the air tube centerline does not intersect the fuel cup centerline.

The combustor of any preceding clause, wherein the dome wall section includes an impingement baffle.

The combustor of any preceding clause, wherein the impingement baffle is coupled to the combustor liner, the dome wall, or both, at least partially upstream of the plate.

The combustor of any preceding clause, wherein the set of air tubes extend to or through the impingement baffle.

The combustor of any preceding clause, wherein the impingement baffle includes a plurality of impingement holes.

The combustor of any preceding clause, wherein at least some of the plurality of impingement holes are offset radially, circumferentially, or radially and circumferentially from the set of cooling holes, relative to the fuel cup centerline.

The combustor of any preceding clause, wherein the plurality of impingement holes includes impingement holes disposed radially outside of the set of air tubes, relative to the fuel cup centerline.

The combustor of any preceding clause, wherein the plurality of impingement holes includes impingement holes disposed radially between the set of air tubes and a fuel inlet of the plate, relative to the fuel cup centerline, circumferentially between the set of air tubes, or both.

The combustor of any preceding clause, wherein the plate includes a protrusion extending away from the combustion chamber; and wherein the at least one air tube of the set of air tubes is at least partially defined by the protrusion.

The combustor of any preceding clause, wherein the protrusion includes a cooling passage.

The combustor of any preceding clause, wherein the cooling passage is disposed at a second oblique angle relative to the fuel cup centerline.

The combustor of any preceding clause, wherein the second oblique angle is different than the oblique angle.

The combustor of any preceding clause, wherein the cooling passage fluidly couples a space between the impingement baffle and the plate with the combustion chamber.

The combustor of any preceding clause, wherein the cooling passage has a smaller hydraulic diameter than the at least one air tube of the set of air tubes.

The combustor of any preceding clause, wherein the dome wall section includes a plate and a at least a portion of a heat shield coupled to the plate.

The combustor of any preceding clause, wherein the heat shield is fixedly coupled to the plate; and wherein the plate is coupled to the combustor liner.

The combustor of any preceding clause, wherein the heat shield comprises the set of air tubes; and the at least one air tube of the set of air tubes, a protrusion of the heat shield, or both is fixedly coupled to the plate.

The combustor of any preceding clause, wherein the heat shield comprises a fuel inlet adapted for connection with a fuel nozzle, a swirler, or the fuel nozzle and the swirler.

The combustor of any preceding clause, wherein the heat shield partially overlaps with the plate in an axial direction, relative to the fuel cup centerline; wherein the heat shield is disposed such a radial gap is present between the heat shield and the combustor liner; and wherein a portion of the plate is aligned with the radial gap.

The combustor of any preceding clause, wherein the plate includes a set of impingement holes.

The combustor of any preceding clause, wherein the set of impingement holes are disposed radially inward of the radial gap relative to the fuel cup centerline.

The combustor of any preceding clause, wherein an inner diameter of the plate is fixedly coupled to an outer radial surface of the at least one air tube of the set of air tubes, a protrusion of the heat shield, or both.

The combustor of any preceding clause, wherein the dome wall section includes a plate and at least a portion of a heat shield fixed to the plate.

The combustor of any preceding clause, wherein the heat shield is fixed to an outer radial surface of a rear end of the at least one air tube of the set of air tubes.

The combustor of any preceding clause, wherein the plate includes a first plate section and a second plate section axially offset from the first plate section; and wherein the set of air tubes extend from the second plate section to or beyond the first plate section.

The combustor of any preceding clause, wherein the heat shield partially overlaps with the first plate section in an axial direction, relative to the fuel cup centerline; wherein the heat shield is disposed such a radial gap is present between the heat shield and the combustor liner; and wherein a portion of the first plate section is aligned with the radial gap.

The combustor of any preceding clause, wherein the first plate section includes a set of impingement holes for cooling the heat shield; and the second plate section includes a set of plate cooling holes.

The combustor of any preceding clause, wherein the second plate section includes a fuel inlet that extends axially forward toward or beyond an axial position of the first plate section for connection with a fuel nozzle, a swirler, or the fuel nozzle and the swirler; and the set of cooling holes are disposed radially between outlets of the set of air tubes and the fuel inlet, circumferentially between the set of air tubes, or both.

The combustor of any preceding clause, wherein the plate is monolithic.

The combustor of any preceding clause, wherein the heat shield includes an aperture having an edge; and wherein the edge is fixed to an outer radial surface of a rear end of the at least one air tube of the set of air tubes.

The combustor of any preceding clause, wherein the plate includes a first plate section and a second plate section disposed axially rearward of the first plate section; wherein the set of air tubes extend from the second plate section to or beyond the first plate section; and wherein the heat shield is fixed to the second plate section.

The combustor of any preceding clause, wherein the heat shield is axially aligned with the second plate section.

The combustor of any preceding clause, wherein the heat shield includes a plurality of heat shield segments, including a first heat shield segment and a second heat shield segment; and the dome wall section of the dome wall includes a portion of the first heat shield segment and a portion of the second heat shield segment.

The combustor of any preceding clause, wherein the plurality of heat shield segments are separate components.

The combustor of any preceding clause, wherein the first heat shield segment and the second heat shield segment are axially aligned with the second plate section and are fixed to the first plate section.

The combustor of any preceding clause, wherein the first heat shield segment includes a protrusion that extends forward through the first plate section.

The combustor of any preceding clause, wherein the first heat shield segment includes a first H-shaped configuration defining a first heat shield segment first recess formed in a first circumferential side of the first heat shield segment and a first heat shield segment second recess formed in a second circumferential side of the first heat shield segment; and the second heat shield segment includes a second H-shaped configuration defining a second heat shield segment first recess formed in a first circumferential side of the second heat shield segment and a second heat shield segment second recess formed in a second circumferential side of the second heat shield segment.

The combustor of any preceding clause, wherein the first circumferential side of the first heat shield segment is disposed adjacent the second circumferential side of the second heat shield segment such that the first heat shield segment first recess is aligned with the second heat shield segment second recess to at least partially define an aperture of the heat shield.

The combustor of any preceding clause, wherein a center of the aperture is aligned with the fuel cup centerline.

The combustor of any preceding clause, wherein the aperture is aligned with an unshielded portion of the plate.

The combustor of any preceding clause, wherein the set of air tubes extend forward from the unshielded portion.

The combustor of any preceding clause, wherein the unshielded portion includes a fuel inlet adapted for connection with a fuel nozzle, a swirler, or the fuel nozzle and the swirler.

The combustor of any preceding clause, wherein the dome wall includes a plate and a heat shield; wherein the plate is coupled to the combustor liner; wherein the heat shield is fixed to the plate; and wherein at least one of the plate and the heat shield includes the set of air tubes.

The combustor of any preceding clause, wherein the dome wall includes a seal connected between the plate and the heat shield; and the seal is disposed at an outer edge portion of the heat shield.

The combustor of any preceding clause, wherein the plate includes a first fuel inlet; wherein the heat shield includes a second fuel inlet; and wherein an outer surface of the second fuel inlet is fixed to an inner surface of the first fuel inlet.

The combustor of any preceding clause, wherein the plate includes the at least one air tube; and the at least one air tube extends rearward from the plate into the heat shield.

The combustor of any preceding clause, wherein a plate radial extent is within 10% of a heat shield radial extent at a line extending from a centerline of the combustor through the fuel cup centerline.

The combustor of any preceding clause, wherein the at least one air tube includes a first air tube; wherein the heat shield includes the first air tube; wherein the plate includes at least one flange that extends forward; and wherein the first air tube is partially disposed in the at least one flange.

The combustor of any preceding clause, wherein the first air tube is disposed such that a gap is present between the at least one flange and the first air tube.

The combustor of any preceding clause, wherein the heat shield includes a subset of cooling holes of the set of cooling holes; wherein the subset of cooling holes includes cooling holes disposed radially outward of a rear portion of the first air tube and radially inward of the rear portion of the first air tube; and wherein the plate includes impingement holes disposed radially inward of the flange and radially outward of the flange.

The combustor of any preceding clause, wherein the at least one air tube includes a second air tube; wherein the plate includes the second air tube; and wherein the second air tube extends rearward from the plate into an aperture of the heat shield.

The combustor of any preceding clause, wherein the at least one air tube includes a first air tube; wherein the plate includes the first air tube; and wherein the first air tube extends rearward from the plate into an aperture of the heat shield.

The combustor of any preceding clause, wherein a rear portion of the first air tube is disposed in the aperture such that radial gap is present between the rear portion and the heat shield.

The combustor of any preceding clause, wherein the heat shield includes a subset of cooling holes of the set of cooling holes; and wherein the subset of cooling holes includes cooling holes disposed radially outward of the aperture and radially inward of the aperture.

The combustor of any preceding clause, wherein the dome wall includes a plate and a heat shield; wherein the plate is coupled to the combustor liner; wherein the heat shield is fixed to the plate; and wherein the set of air tubes are formed separately from and connected to the plate, the heat shield, or the plate and the heat shield.

The combustor of any preceding clause, wherein each air tube of the set of air tubes is fixed to one of the plate and the heat shield, and floating relative to the other of the plate and the heat shield.

The combustor of any preceding clause, wherein the plate and the heat shield include corresponding apertures into which the set of air tubes are inserted.

The combustor of any preceding clause, wherein a first air tube of the set of air tubes is connected the plate via a snap ring and a seal.

The combustor of any preceding clause, wherein the seal comprises a spring seal.

The combustor of any preceding clause, wherein the seal restricts fluid flow between an outer surface of the first air tube and the plate.

The combustor of any preceding clause, wherein the first air tube is fixed to the heat shield.

The combustor of any preceding clause, wherein a first air tube of the set of air tubes comprises a discourager seal.

The combustor of any preceding clause, wherein the discourager seal is adjacent a forward surface of the plate.

The combustor of any preceding clause, The combustor of claim 83, comprising a seal;
wherein the seal restricts fluid flow at an outer surface of a first air tube of the set of air tubes.

The combustor of any preceding clause, The combustor of claim 92, wherein the seal is integrally formed with the first air tube.

The combustor of any preceding clause, wherein the dome wall includes a plate and a heat shield; and wherein the heat shield includes a first air tube of the set of air tubes that extends short of a forward surface of the plate.

The combustor of any preceding clause, wherein the plate includes a set of feeding holes.

The combustor of any preceding clause, wherein a feeding hole hydraulic diameter of the set of feeding holes is larger than an air tube hydraulic diameter of the first air tube; and a cooling hole hydraulic diameter of the set of cooling holes is half or less than the air tube hydraulic diameter.

The combustor of any preceding clause, wherein the heat shield includes a dual-wall configuration comprising a first heat shield wall and a second heat shield wall disposed between the first heat shield wall and the plate.

The combustor of any preceding clause, wherein the heat shield is formed via investment casting, additive manufacturing, or both.

The combustor of any preceding clause, wherein the first heat shield wall comprises the set of cooling holes.

The combustor of any preceding clause, wherein the second heat shield wall comprises a set of impingement holes.

The combustor of any preceding clause, wherein the first air tube extends from the first heat shield wall through the second heat shield wall and partially into the plate.

The combustor of any preceding clause, wherein the first air tube and the heat shield, including the first heat shield wall and the second heat shield wall, are formed as a monolithic component.

The combustor of any preceding clause, further comprising an impingement baffle disposed between the heat shield and the plate.

The combustor of any preceding clause, wherein the first air tube extends forward from the heat shield through the impingement baffle and partially into the plate.

The combustor of any preceding clause, wherein the heat shield includes a protrusion extending away from the combustion chamber; and wherein the first air tube is at least partially defined by the protrusion.

The combustor of any preceding clause, wherein the impingement baffle is in contact with an axial surface of the protrusion.

The combustor of any preceding clause, wherein the impingement baffle is fixed to the heat shield.

The combustor of any preceding clause, wherein the protrusion includes a cooling passage fluidly coupling (i) a space between the impingement baffle and the heat shield, and (ii) the combustion chamber.

The combustor of any preceding clause, wherein the cooling passage extends from a rear surface of the heat shield to an outer radial surface of the protrusion.

The combustor of any preceding clause, wherein the cooling passage is disposed at a second oblique angle relative to the fuel cup centerline.

The combustor of any preceding clause, wherein the dome wall includes a plate, a heat shield, and an impingement baffle disposed at least partially between the plate and heat shield; and wherein the impingement baffle includes a first air tube of the set of air tubes.

The combustor of any preceding clause, wherein the first air tube extends rearward into the heat shield.

The combustor of any preceding clause, wherein the first air tube extends forward toward the plate.

The combustor of any preceding clause, wherein the plate includes an annular extension that extends toward the first air tube.

The combustor of any preceding clause, wherein the annular extension is aligned with the air tube centerline.

The combustor of any preceding clause, wherein the annular extension extends short of the first air tube such that a gap is present between the annular extension and the first air tube.

The combustor of any preceding clause, wherein the dome wall includes a plate and a heat shield; wherein the at least one air tube includes a first air tube; wherein the first air tube includes a second portion connected to the portion; wherein the second portion includes a second portion centerline that is disposed at a second oblique angle relative to the air tube centerline.

The combustor of any preceding clause, wherein the second portion centerline is parallel with the fuel cup centerline.

The combustor of any preceding clause, wherein the portion extends forward from the heat shield to the second portion; and wherein the second portion extends from the portion into the plate.

The combustor of any preceding clause, wherein the second portion extends through the plate.

The combustor of any preceding clause, wherein the dome wall includes a seal in contact with the plate and the second portion.

The combustor of any preceding clause, wherein the dome wall includes a snap ring or a nut engaged with the second portion and in contact with the seal.

The combustor of any preceding clause, wherein the seal comprises a spring seal that restricts fluid flow between an outer surface of the second portion and the plate.

The combustor of any preceding clause, wherein the dome wall includes a set of fasteners; and wherein the set of air tubes are provided in the set of fasteners.

The combustor of any preceding clause, wherein the dome wall includes a plate and a heat shield; and the heat shield is fixed to the plate via the set of fasteners.

The combustor of any preceding clause, wherein the heat shield is fixed to the plate exclusively via the set of fasteners.

The combustor of any preceding clause, wherein the at least one air tube includes a first air tube; wherein the set of fasteners includes a first fastener including the first air tube; and wherein a center of an outlet of the first air tube is disposed at a rear surface of the first fastener and is offset from a center of the rear surface of the first fastener.

The combustor of any preceding clause, wherein the at least one air tube includes a second portion having a second portion centerline that is parallel to the fuel cup centerline.

The combustor of any preceding clause, wherein the dome wall includes a wedge washer and a nut.

The combustor of any preceding clause, wherein the set of fasteners includes a first bolt including a first air tube of the at least one air tube; wherein a nut is engaged with first bolt; and wherein the wedge washer is disposed at least partially between the nut and the plate.

The combustor of any preceding clause, wherein a shape of the wedge washer corresponds to the oblique angle.

The combustor of any preceding clause, wherein the wedge washer includes a triangular cross-sectional shape including a plurality of wedge washer angles; and

wherein at least one of the plurality of wedge washer angles is equal to the oblique angle.

The combustor of any preceding clause, wherein the first air tube is straight.

The combustor of any preceding clause, wherein the dome wall includes a dome frame, a first heat shield, and a second heat shield.

The combustor of any preceding clause, wherein the dome frame includes an outer frame wall, an inner frame wall, a frame hub, and a plurality of frame struts connecting the outer frame wall, the inner frame wall, and the frame hub.

The combustor of any preceding clause, wherein the plurality of frame struts are offset from inlets of the set of air tubes.

The combustor of any preceding clause, wherein the second heat shield includes the at least one air tube; wherein plurality of struts are separated by a plurality of voids; wherein the at least one air tube extends forward from the second heat shield into a void of the plurality of voids.

The combustor of any preceding clause, wherein the first heat shield includes a first section connected to an outer liner of the combustor liner and a second section connected to an inner liner of the combustor liner.

The combustor of any preceding clause, wherein the first section and the second section define an aperture; and wherein the second heat shield is aligned with, disposed partially in, or aligned with and disposed at least partially in the aperture.

The combustor of any preceding clause, wherein the first section includes a first section axial portion and a first section radial portion extending radially inward from the first section axial portion; wherein the second section includes a second section axial portion and a second section radial portion extending outward from the second section axial portion; and wherein the second heat shield includes a second heat shield wall and a fuel inlet adapted for connection with a fuel nozzle, a swirler, or the fuel nozzle and the swirler.

The combustor of any preceding clause, wherein the fuel inlet extends into and is connected to the frame hub; wherein the outer frame wall is adjacent the first section axial portion; and wherein the inner frame wall is adjacent the second section axial portion.

The combustor of any preceding clause, wherein the second heat shield wall is at least partially axially aligned with the first section radial portion, the second section radial portion, or the first section radial portion and the second section radial portion.

The combustor of any preceding clause, wherein the second heat shield includes the at least one air tube; and wherein the at least one air tube extends forward from the second heat shield wall.

The combustor of any preceding clause, wherein the second heat shield wall is circular and the aperture is circular.

The combustor of any preceding clause, wherein the first section radial portion, the second section radial portion, and the second heat shield wall include cooling holes of the set of cooling holes.

The combustor of any preceding clause, wherein an impingement baffle is connected to the first heat shield.

The combustor of any preceding clause, wherein the impingement baffle and the at least one air tube partially overlap in an axial direction.

The combustor of any preceding clause, wherein the impingement baffle is disposed adjacent the first section radial portion and the first section axial portion.

The combustor of any preceding clause, wherein the impingement baffle is disposed adjacent the second section radial portion and the second section axial portion.

The combustor of any preceding clause, wherein the first section radial portion includes a first cooling hole of the set of cooling holes; and wherein the impingement baffle includes an impingement hole offset from the first cooling hole in a radial direction, a circumferential direction, or both.

The combustor of any preceding clause, wherein the second heat shield wall includes a second cooling hole of the set of cooling holes.

The combustor of any preceding clause, comprising one or more additional fuel cups circumferentially spaced from the fuel cup relative to a centerline of the combustor; wherein the first heat shield includes a first section connected to the outer liner and a second section connected to the inner liner; and wherein the first section and the second section cooperate to define apertures for the fuel cup and the one or more additional fuel cups.

The combustor of any preceding clause, wherein the dome frame includes an outer frame wall, an inner frame wall, a plurality of frame hubs, and a plurality of frame struts connecting the outer frame wall, the inner frame wall, and the frame hubs.

The combustor of any preceding clause, wherein the plurality of frame hubs includes a respective frame hub for the fuel cup and the one or more additional fuel cups.

The combustor of any preceding clause, wherein the dome wall includes an additional second heat shield for each of the one or more additional fuel cups.

The combustor of any preceding clause, wherein the first section and the second section are disposed such that a cooling slot is present between the first section and the second section.

The combustor of any preceding clause, wherein the cooling slot extends from the second heat shield to a first additional second heat shield of the one or more additional second heat shields.

The combustor of any preceding clause, wherein an interface between the first section and the second section is fluidly sealed.

A gas turbine engine comprising the combustor of any preceding clause.

An aircraft comprising the combustor of any preceding clause.

While described with respect to a turbine engine, it should be appreciated that the combustor as described herein can be for any engine with a having a combustor. It should be appreciated that application of aspects of the disclosure discussed herein are applicable to engines with propeller sections or fan and booster sections along with turbojets, turbo engines, and turboshaft engines in aviation, marine, and stationary applications as well.

To the extent not already described, the different features and structures of the various embodiments can be used in combination, or in substitution with each other as desired. That one feature is not illustrated in all of the embodiments is not meant to be construed that it cannot be so illustrated, but is done for brevity of description. Thus, the various features of the different embodiments can be mixed and matched as desired to form new embodiments, whether or not the new embodiments are expressly described. All combinations or permutations of features described herein are covered by this disclosure.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A combustor (30) for a turbine engine (10) comprising:
a dome wall (46, 146, 246, 346, 446, 546, 646, 746, 846, 946, 1046, 1146, 2046);
a combustor liner (40) extending from the dome wall (46, 146, 246, 346, 446, 546, 646, 746, 846, 946, 1046, 1146, 2046); and
a combustion chamber (50) at least partially defined by the dome wall (46, 146, 246, 346, 446, 546, 646, 746, 846, 946, 1046, 1146, 2046) and the combustor liner (40);
wherein the dome wall (46, 146, 246, 346, 446, 546, 646, 746, 846, 946, 1046, 1146, 2046) includes:
a fuel cup (31, 131, 231, 331, 431, 531, 631, 731, 831, 931, 1031, 1131, 2031) disposed at a dome wall section of the dome wall (46, 146, 246, 346, 446, 546, 646, 746, 846, 946, 1046, 1146, 2046), the fuel cup (31, 131, 231, 331, 431, 531, 631, 731, 831, 931, 1031, 1131, 2031) comprising a fuel cup centerline;
a set of air tubes (70, 170, 270, 370, 470, 570, 670, 770, 870, 970, 1070, 1170, 2070) extending at least partially through the dome wall section (46, 146, 246, 346, 446, 546, 646, 746, 846, 946, 1046, 1146, 2046) to direct air into the combustion chamber (50); and
a set of cooling holes (80, 180, 280, 380, 480, 580, 680, 780, 880, 980, 1080, 1180, 2080) extending through the dome wall section (46, 146, 246, 346, 446, 546, 646, 746, 846, 946, 1046, 1146, 2046).

2. The combustor (30) of claim 1, wherein the set of cooling holes (80, 180, 280, 380, 480, 580, 680, 780, 880, 980, 1080, 1180, 2080) are parallel with the fuel cup centerline.

3. The combustor (30) of any preceding claim, wherein the set of air tubes (70, 170, 270, 370, 470, 570, 670, 770, 870, 970, 1070, 1170, 2070) includes one or more air tubes including a portion having an air tube centerline disposed at an oblique angle relative to the fuel cup centerline.

4. The combustor (30) of claim 3, wherein the oblique angle is an acute angle such that the at least one air tube directs air into the combustion chamber (50) and toward the fuel cup centerline.

5. The combustor (30) of any preceding claim, wherein an air tube hydraulic diameter of the at least one air tube is at least two times larger than a cooling hole hydraulic diameter of at least one cooling hole of the set of cooling holes (80, 180, 280, 380, 480, 580, 680, 780, 880, 980, 1080, 1180, 2080).

6. The combustor (30) of claim 5, wherein the dome wall section (46, 146, 246, 346, 446, 546, 646, 746, 846, 946, 1046, 1146, 2046) includes a fuel inlet (82, 182, 282, 382, 482, 582, 682, 782, 882, 982, 1082, 1182, 2106); and
wherein a fuel inlet (82, 182, 282, 382, 482, 582, 682, 782, 882, 982, 1082, 1182, 2106) hydraulic diameter of the fuel inlet is at least twice as large as the air tube hydraulic diameter.

7. The combustor (30) of any preceding claim, wherein the dome wall (46, 146, 246, 346, 446, 546, 646, 746, 846, 946, 1046, 1146, 2046) comprises a plate (62, 162, 262, 362, 462, 562, 662, 762, 862, 962, 1062, 1162) and a heat shield (64, 364, 464, 564, 664, 764, 864, 964, 1064, 1164);
wherein heat shield (64, 364, 464, 564, 664, 764, 864, 964, 1064, 1164) includes the set of air tubes (70, 170, 270, 370, 470, 570, 670, 770, 870, 970, 1070, 1170, 2070); and
wherein the set of air tubes (70, 170, 270, 370, 470, 570, 670, 770, 870, 970, 1070, 1170, 2070) extend forward from the heat shield (64, 364, 464, 564, 664, 764, 864, 964, 1064, 1164) toward or into the plate (62, 162, 262, 362, 462, 562, 662, 762, 862, 962, 1062, 1162).

8. The combustor (30) of claim 7, wherein the plate (62, 162, 262, 362, 462, 562, 662, 762, 862, 962, 1062, 1162) includes a second set of air tubes (70, 170, 270, 370, 470, 570, 670, 770, 870, 970, 1070, 1170, 2070); and
wherein the second set of air tubes (70, 170, 270, , 370, 470, 570, 670, 770, 870, 970, 1070, 1170, 2070) extend rearward from the plate (62, 162, 262, 362, 462, 562, 662, 762, 862, 962, 1062, 1162) toward or into the heat shield (64, 364, 464, 564, 664, 764, 864, 964, 1064, 1164).

9. The combustor (30) of claim 1 to 6, wherein the dome wall (46, 146, 246, 346, 446, 546, 646, 746, 846, 946, 1046, 1146, 2046) comprises a plate (62, 162, 262, 362, 462, 562, 662, 762, 862, 962, 1062, 1162) and a heat shield (64, 364, 464, 564, 664, 764, 864, 964, 1064, 1164);
wherein the plate (62, 162, 262, 362, 462, 562, 662, 762, 862, 962, 1062, 1162) includes the set of air tubes (70, 170, 270, 370, 470, 570, 670, 770, 870, 970, 1070, 1170, 2070); and
wherein the set of air tubes (70, 170, 270, 370, 470, 570, 670, 770, 870, 970, 1070, 1170, 2070) extend rearward from the plate (62, 162, 262, 362, 462, 562, 662, 762, 862, 962, 1062, 1162) toward or into the heat shield (64, 364, 464, 564, 664, 764, 864, 964, 1064, 1164).

10. The combustor (30) of any preceding claim, wherein the set of cooling holes (80, 180, 280, 380, 480, 580, 680, 780, 880, 980, 1080, 1180, 2080) includes cooling holes disposed radially outward of the set of air tubes (70, 170, 270, 370, 470, 570, 670, 770, 870, 970, 1070, 1170, 2070) and cooling holes disposed radially inward of the set of air tubes (70, 170, 270, 370, 470, 570, 670, 770, 870, 970, 1070, 1170, 2070).

11. The combustor (30) of claim 10, wherein the dome wall (46, 146, 246, 346, 446, 546, 646, 746, 846, 946, 1046, 1146, 2046) comprises a set of impingement holes (90, 290, 390, 490, 590, 690, 790, 890, 990, 1090, 1190, 2090); and
wherein the set of impingement holes (90, 290, 390, 490, 590, 690, 790, 890, 990, 1090, 1190, 2090) includes impingement holes disposed radially outward of the set of air tubes and impingement holes disposed radially inward of the set of air tubes (70, 170, 270, 370, 470, 570, 670, 770, 870, 970, 1070, 1170, 2070).

12. The combustor (30) of claim 1, wherein the section of the dome wall (46, 146, 246, 346, 446, 546, 646, 746, 846, 946, 1046, 1146, 2046) includes a plate (62, 162, 262, 362, 462, 562, 662, 762, 862, 962, 1062, 1162); and
wherein the plate (62, 162, 262, 362, 462, 562, 662, 762, 862, 962, 1062, 1162) is coupled to the combustor liner (40); and
wherein the plate (62, 162, 262, 362, 462, 562, 662, 762, 862, 962, 1062, 1162) includes the set of air tubes (70, 170, 270, 370, 470, 570, 670, 770, 870, 970, 1070, 1170, 2070) and the set of cooling holes (80, 180, 280, 380, 480, 580, 680, 780, 880, 980, 1080, 1180, 2080).

13. The combustor (30) of claim 12, wherein the plate (62, 162, 262, 362, 462, 562, 662, 762, 862, 962, 1062, 1162) includes a fuel inlet (82, 182, 282, 382, 482, 582, 682, 782, 882, 982, 1082, 1182, 2106) adapted for connection with a fuel nozzle (38), a swirler (52), or a fuel nozzle (38) and a swirler (52).

14. The combustor (30) of claim 13, wherein the set of cooling holes (80, 180, 280, 380, 480, 580, 680, 780, 880, 980, 1080, 1180, 2080) includes cooling holes disposed radially outside of the set of air tubes (70, 170, 270, 370, 470, 570, 670, 770, 870, 970, 1070, 1170, 2070), cooling holes disposed radially between the set of air tubes (70, 170, 270, 370, 470, 570, 670, 770, 870, 970, 1070, 1170, 2070) and the fuel inlet (82, 182, 282, 382, 482, 582, 682, 782, 882, 982, 1082, 1182, 2106), cooling holes disposed circumferentially between the set of air tubes (70, 170, 270, 370, 470, 570, 670, 770, 870, 970, 1070, 1170, 2070), or a combination thereof.

15. The combustor (30) of claim 1, wherein at least one air tube of the set of air tubes (70, 170, 270, 370, 470, 570, 670, 770, 870, 970, 1070, 1170, 2070) is integrally formed with the plate (62, 162, 262, 362, 462, 562, 662, 762, 862, 962, 1062, 1162).
